# EUROPEAN PATENT APPLICATION

(11) **EP 4 192 086 A1**
(43) Date of publication of application: **07.06.2023**
(21) Application number: 21860358.7
(22) Date of filing: 24.08.2021
(51) Int. Cl.: H04W 24/06

(54) **COMMUNICATION METHOD AND APPARATUS**

(30) Priority: 25.08.2020 CN 202010864940
(71) Applicant: Huawei Technologies Co., Ltd., Shenzhen, Guangdong 518129 (CN)
(72) Inventor: HUANGFU, Yourui, Shenzhen, Guangdong 518129 (CN); WANG, Jian, Shenzhen, Guangdong 518129 (CN); LI, Rong, Shenzhen, Guangdong 518129 (CN); WANG, Jun, Shenzhen, Guangdong 518129 (CN)
(74) Representative: Gill Jennings & Every LLP
(86) International application number: PCT/CN2021/114246
(87) International publication number: WO 2022/042523

(57) **Abstract**

Embodiments of this application relate to a communication method and apparatus, to design a constellation diagram that matches a communication scenario. The constellation diagram can adapt to different communication scenarios and meet different communication performance requirements, thereby improving network performance. The communication method includes: A first communication apparatus sends a constellation diagram design parameter, where the constellation diagram design parameter includes a communication scenario design parameter and a communication apparatus design parameter. The first communication apparatus receives information about a second constellation diagram, where the second constellation diagram corresponds to the constellation diagram design parameter. The first communication apparatus performs communication by using the second constellation diagram.

## Description

### CROSS-REFERENCE TO RELATED APPLICATIONS

This application claims priority to Chinese Patent Application No. 202010864940.0, filed with the China National Intellectual Property Administration on August 25, 2020 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A digital communication system is a system that uses digital signals to transmit information. In the digital communication system, to-be-sent information is transmitted on a carrier. A mapping of the to-be-sent information to information transmitted on the carrier is usually performed through digital modulation. The digital modulation may distinguish signals by amplitudes and phases. Each combination of an amplitude and a phase may be represented as one point in two-dimensional space. Points of all combinations of amplitudes and phases may be considered as one constellation diagram on a two-dimensional plane. In other words, the constellation diagram includes a plurality of constellation points, and each of the constellation points is obtained by combining an amplitude and a phase. Generally, the to-be-sent information is encoded and then mapped to the constellation diagram (or a corresponding constellation point in the constellation diagram), to implement the digital modulation.

A fixed design of a constellation diagram is used in an existing communication system. Locations of constellation points in the constellation diagram are fixed. Two communication parties perform modulation and demodulation in communication based on the fixed constellation diagram.

However, with development of communication technologies and communication scenarios and a higher requirement for communication system performance, the fixed constellation diagram cannot adapt to a changing communication scenario and cannot meet a changing requirement for communication performance. As a result, communication performance is relatively poor in an actual communication process.

### SUMMARY

Embodiments of this application provide a communication method and an apparatus, to design a constellation diagram that matches a communication scenario. The constellation diagram can adapt to different communication scenarios and meet communication performance requirements, thereby improving network performance.

According to a first aspect, an embodiment of this application provides a communication method, including: A first communication apparatus sends a constellation diagram design parameter, where the constellation diagram design parameter includes a communication scenario design parameter and a communication apparatus design parameter. The first communication apparatus receives information about a second constellation diagram, where the second constellation diagram corresponds to the constellation diagram design parameter. The first communication apparatus performs communication by using the second constellation diagram.

The two communication parties perform modulation and demodulation by using a constellation diagram during communication. With changes in communication scenarios and a higher requirement for communication performance, a fixed constellation diagram cannot meet a communication requirement. Therefore, the first communication apparatus sends the constellation diagram design parameter to the second communication apparatus. The second communication apparatus generates the second constellation diagram based on the constellation diagram design parameter, and sends the second constellation diagram to the first communication apparatus. The first communication apparatus and the second communication apparatus may communicate with each other by using the new second constellation diagram. It may be learned that in the method, a constellation diagram used by the two communication parties during communication may adaptively change based on different communication scenarios. A constellation diagram that better matches a current communication scenario is designed, so that network performance can be improved, and maximum network performance can be ensured.

In a possible implementation, before the first communication apparatus sends the constellation diagram design parameter, the first communication apparatus may further perform communication by using a first constellation diagram.

Optionally, the first communication apparatus may send the constellation diagram design parameter by using the first constellation diagram, and the second communication apparatus may receive the constellation diagram design parameter by using the first constellation diagram.

In a possible implementation, before the first communication apparatus performs communication by using the second constellation diagram, the first communication apparatus may further update the first constellation diagram to the second constellation diagram, where the first constellation diagram is different from the second constellation diagram.

The second constellation diagram may be generated by the second communication apparatus based on the constellation diagram design parameter.

Optionally, in the first constellation diagram and the second constellation diagram, there are a same quantity of constellation points, and coordinates of at least one corresponding constellation point are different. The at least one corresponding constellation point may be at least one constellation point located in a same quadrant.

In a possible implementation, the communication scenario design parameter includes at least one piece of the following information: a channel characteristic or environment visualization information, where the channel characteristic includes at least one piece of the following information: a channel environment type indication, a channel model indication, or a channel model, and the environment visualization information includes at least one piece of the following information: an image collected in an environment, a depth map, point cloud data, or a three-dimensional image.

The communication apparatus design parameter includes at least one piece of the following information: a user behavior profile or a constellation diagram designer return parameter, where the user behavior profile includes at least one piece of the following information: a location distribution of a communication apparatus, a service type distribution of a communication apparatus, a mobility distribution of a communication apparatus, a bit rate distribution of a communication apparatus, or a radio frequency link hardware parameter distribution of a communication apparatus, and the constellation diagram designer return parameter includes at least one piece of the following information: performance fed back by the communication apparatus, performance calculated by a constellation diagram designer, or a formula used to evaluate constellation diagram performance.

The communication apparatus includes the first communication apparatus and/or the second communication apparatus. For example, the location distribution of the communication apparatus may include a location distribution of the first communication apparatus and/or a location distribution of the second communication apparatus; the service type distribution of the communication apparatus includes a service type distribution of the first communication apparatus and/or the location distribution of the second communication apparatus; the mobility distribution of the communication apparatus includes a mobility distribution of the first communication apparatus and/or a mobility distribution of the second communication apparatus; the bit rate distribution of the communication apparatus includes a bit rate distribution of the first communication apparatus and/or a bit rate distribution of the second communication apparatus; the radio frequency link hardware parameter distribution of the communication apparatus includes a radio frequency link hardware parameter distribution of the first communication apparatus and/or a radio frequency link hardware parameter distribution of the second communication apparatus; and the performance fed back by the communication apparatus includes performance fed back by the first communication apparatus and/or performance fed back by the second communication apparatus.

In a possible implementation, after the first communication apparatus receives the information about the second constellation diagram, the first communication apparatus may further replace the second constellation diagram with a third constellation diagram, where the third constellation diagram is a constellation diagram that is in a preset constellation diagram and that is closest to the second constellation diagram.

Demodulation with the third constellation diagram is less complex than demodulation with the second constellation diagram.

If the second constellation diagram is obtained through deep reinforcement learning, the second constellation diagram may be irregular, and demodulation with the second constellation diagram may be more complex. Therefore, a plurality of regular constellation diagrams may be preset to reduce complexity of demodulation with a constellation diagram obtained through deep learning. The third constellation diagram may be a regular constellation diagram. In other words, there is a regularity in distributions or locations of constellation points in the third constellation diagram. For example, the constellation diagram in the third constellation diagram is symmetrically distributed.

In a possible implementation, after the first communication apparatus performs communication by using the second constellation diagram, the method further includes:
The first communication apparatus receives indication information, where the indication information is used to indicate to use a rollback mechanism, and the rollback mechanism is used to indicate to replace the second constellation diagram with the first constellation diagram.

Alternatively, the first communication apparatus sends a first request message, where the first request message is used to request to use a rollback mechanism, and the rollback mechanism is used to indicate to replace the second constellation diagram with the first constellation diagram.

The updated constellation diagram may fail to work, or a degree of performance degradation during working significantly exceeds a threshold. It indicates that the updated constellation diagram cannot adapt to a current scenario, and communication cannot be performed well by using the updated constellation diagram. Therefore, the second constellation diagram may be replaced with the first constellation diagram by using the rollback mechanism. The rollback mechanism may be initiated by the first communication apparatus, or may be initiated by the second communication apparatus.

In a possible implementation, the first communication apparatus may further store a correspondence between the constellation diagram design parameter and the second constellation diagram.

In a possible implementation, the first communication apparatus may further search, based on the constellation diagram design parameter, the correspondence for the second constellation diagram corresponding to the constellation diagram design parameter.

The constellation diagram designer may generate a same constellation diagram based on a same communication scenario or similar communication scenarios. Therefore, the first communication apparatus may store a correspondence between a constellation diagram design parameter and a constellation diagram, so that constellation diagrams corresponding to a same communication scenario can be quickly obtained subsequently.

According to a second aspect, an embodiment of this application provides a communication method, including: A second communication apparatus receives a constellation diagram design parameter, where the constellation diagram design parameter includes a communication scenario design parameter and a communication apparatus design parameter. The second communication apparatus sends information about a second constellation diagram, where the second constellation diagram corresponds to the constellation diagram design parameter. The second communication apparatus performs communication by using the second constellation diagram.

In a possible implementation, before the second communication apparatus receives the constellation diagram design parameter, the second communication apparatus may further perform communication by using a first constellation diagram.

In a possible implementation, the communication scenario design parameter includes at least one piece of the following information: a channel characteristic or environment visualization information, where the channel characteristic includes at least one piece of the following information: a channel environment type indication, a channel model indication, or a channel model, and the environment visualization information includes at least one piece of the following information: an image collected in an environment, a depth map, point cloud data, or a three-dimensional image.

The communication apparatus design parameter includes at least one piece of the following information: a user behavior profile or a constellation diagram designer return parameter, where the user behavior profile includes at least one piece of the following information: a location distribution of a communication apparatus, a service type distribution of a communication apparatus, a mobility distribution of a communication apparatus, a bit rate distribution of a communication apparatus, or a radio frequency link hardware parameter distribution of a communication apparatus, and the constellation diagram designer return parameter includes at least one piece of the following information: performance fed back by the communication apparatus, performance calculated by a constellation diagram designer, or a formula used to evaluate constellation diagram performance.

In a possible implementation, before the second communication apparatus sends the information about the second constellation diagram, the second communication apparatus may further update the first constellation diagram to the second constellation diagram based on the constellation diagram design parameter, where the first constellation diagram is different from the second constellation diagram.

In a possible implementation, that the second communication apparatus updates the first constellation diagram to the second constellation diagram based on the constellation diagram design parameter includes: The second communication apparatus may input the constellation diagram design parameter to a constellation diagram designer, and the second communication apparatus updates the first constellation diagram to the second constellation diagram based on the constellation diagram designer.

For example, the constellation diagram designer may generate the second constellation diagram based on the constellation diagram design parameter. A process of generating the second constellation diagram by designing the constellation diagram may be perceived as a process of deep reinforcement learning.

In a possible implementation, that the second communication apparatus updates the first constellation diagram to the second constellation diagram based on the constellation diagram designer includes: An agent determines a modulation level of a to-be-generated second constellation diagram, and determines a quantity N of constellation points that corresponds to the modulation level, where N is a positive integer. The agent determines coordinates of the N constellation points. An evaluator determines decoding results of the N constellation points based on the constellation diagram design parameter and scenario states corresponding to the coordinates of the N constellation points. The agent adjusts, based on the decoding results of the N constellation points, the coordinates of the N constellation points until the constellation diagram designer converges.

The modulation level of the to-be-generated second constellation diagram may be the same as the modulation level of the first constellation diagram, or the modulation level of the to-be-generated second constellation diagram may be agreed/negotiated in advance by the first communication apparatus and the second communication apparatus during communication. A convergence condition of the constellation diagram designer may be a quantity of episodes of deep reinforcement learning. Alternatively, the convergence of the constellation diagram designer is determined when a return does not increase/change any more. The return is used to evaluate communication performance of a generated constellation diagram, and may include one or more of the following indicators: a throughput, a bit error ratio (bit error ratio, BER), a block error rate (block error rate, BLER), and a spectral efficiency.

In this implementation, a state in deep reinforcement learning includes a constellation diagram generated by the agent, an action in deep reinforcement learning includes an adjustment performed by the agent on the coordinates of the constellation points, and the return in deep reinforcement learning includes the decoding results determined by the evaluator.

The constellation diagram designer is located in a communication link. To be specific, the constellation diagram designer is included in a communication link between the first communication apparatus and the second communication apparatus. Optionally, the constellation diagram designer includes the agent and the evaluator; or the constellation diagram designer includes the agent, but the evaluator is located outside the constellation diagram designer.

Optionally, the decoding results may alternatively be bit error rates. In other words, the bit error rates are fed back to the agent as the return.

In a possible implementation, that the agent adjusts, based on the decoding results of the N constellation points, the coordinates of the N constellation points includes: The agent modulates coordinates of some of the N constellation points based on the decoding results of the N constellation points.

In this implementation, the agent may design only a part of the constellation diagram. For example, there are a total of eight constellation points in the constellation diagram. Reinforcement learning may explore and design only two of the constellation points, and coordinates of the other constellation points remain unchanged. This is equivalent to partial correction and fine tuning of the constellation diagram, greatly reducing time steps for designing the constellation diagram. Consequently, resource consumption caused by exploration in deep reinforcement learning can be reduced. Moreover, it can be ensured that performance of the constellation diagram obtained by exploration does not deteriorate too much compared with performance of a constellation diagram in a current standard, and therefore reliable transmission in a system can be ensured.

In a possible implementation, that the constellation diagram designer determines constellation point coordinates of the N constellation points includes: The constellation diagram designer may determine, within specified coordinate ranges, the constellation point coordinates of the N constellation points.

In this implementation, setting a boundary for exploring a constellation point is considered. Values of coordinates of the constellation point are sampled from Gaussian distributions, and therefore value ranges of the coordinates of the constellation point are theoretically infinite. Coordinate value ranges are set for exploring the constellation point. In this way, when coordinate values that are output through exploration lie outside the coordinate value ranges, coordinates of the constellation point can be set to the coordinate value ranges. This ensures that performance of a constellation diagram obtained by exploration is not too poor.

In a possible implementation, the evaluator may further determine decoding results of coordinates of N constellation points obtained by each adjustment, and the agent selects coordinates of N constellation points with optimal decoding results, to generate the second constellation diagram.

A goal of the agent is to maximize decoding performance. In other words, the goal of the agent is to optimize the decoding performance and gradually converge. After a period of time of training, the decoding performance almost no longer increases. In this case, an episode with best performance may be selected, an action/action of each time step is recorded, and a complete constellation diagram is sequentially formed, so as to obtain a second constellation diagram designed for a current scenario.

In a possible implementation, if soft information is not going to be output during demodulation, the network device may further determine, based on a distance between a received signal of service data and each constellation point in the second constellation diagram, a constellation point obtained by demodulating the signal of the service data. For example, it may be determined that a constellation point with a smallest distance is the constellation point obtained by demodulating the signal of the service data.

If soft information is going to be output during demodulation, the network device may further decode a received signal of service data based on a distance between the signal of the service data and each constellation point in the second constellation diagram, and determine an evaluation result of the service data. For example, a decoding method may be used to calculate the evaluation result, namely, soft information, of the service data.

In a possible implementation, the agent may further output other parameters of the communication link, for example, a filter parameter, a pilot signal configuration parameter, a soft information processing configuration parameter, and a precoding configuration parameter that are of the communication link. These parameters and a constellation diagram are jointly adjusted and optimized, to obtain optimal decoding performance.

In a possible implementation, before the second communication apparatus performs communication by using the second constellation diagram, the second communication apparatus may further replace the second constellation diagram with a third constellation diagram, where the third constellation diagram is a constellation diagram that is in a preset constellation diagram and that is closest to the second constellation diagram.

Demodulation with the third constellation diagram is less complex than demodulation with the second constellation diagram. Replacing the third constellation diagram with the third constellation diagram facilitates modulation and demodulation in a communication process, thereby improving communication performance.

In a possible implementation, after the second communication apparatus performs communication by using the second constellation diagram, the method further includes:
The second communication apparatus sends indication information, where the indication information is used to indicate to use a rollback mechanism, and the rollback mechanism is used to indicate to replace the second constellation diagram with the first constellation diagram.

Alternatively, the second communication apparatus receives a first request message, where the first request message is used to request to use a rollback mechanism, and the rollback mechanism is used to indicate to replace the second constellation diagram with the first constellation diagram.

The updated constellation diagram may fail to work, or a degree of performance degradation during working significantly exceeds a threshold. It indicates that the updated constellation diagram cannot adapt to the current scenario. The rollback mechanism is used to switch back from the second constellation diagram to the first constellation diagram. This avoids impact on communication between the communication apparatuses, thereby ensuring normal communication between the communication apparatuses.

In a possible implementation, the second communication apparatus may further store a correspondence between the constellation diagram design parameter and the second constellation diagram.

In a possible implementation, the second communication apparatus may further search, based on the constellation diagram design parameter, the correspondence for the second constellation diagram corresponding to the constellation diagram design parameter.

The constellation diagram designer may generate a same constellation diagram based on a same communication scenario or similar communication scenarios. Therefore, the second communication apparatus may store a correspondence between a constellation diagram design parameter and a constellation diagram, so that constellation diagrams corresponding to a same communication scenario can be quickly obtained subsequently, and network performance can be improved.

According to a third aspect, an embodiment of this application further provides a communication apparatus. The communication apparatus has a function of implementing the first communication apparatus or the second communication apparatus in the foregoing method embodiments. The functions may be implemented by hardware, or may be implemented by hardware executing corresponding software. The hardware or the software includes one or more functional modules corresponding to the foregoing functions.

According to a fourth aspect, an embodiment of this application further provides a communication apparatus. The communication apparatus may be the first communication apparatus or the second communication apparatus in the foregoing method embodiments, or a chip disposed in the first communication apparatus or the second communication apparatus. The communication apparatus includes a transceiver and a processor. Optionally, the communication apparatus further includes a memory. The memory is configured to store a computer program or instructions. The processor is coupled to each of the memory and the transceiver. When the processor executes the computer program or the instructions, the communication apparatus is enabled to perform the method performed by the first communication apparatus or the second communication apparatus in the foregoing method embodiments.

According to a fifth aspect, an embodiment of this application further provides a computer program product, where the computer program product includes computer program code, and when the computer program code is run on a computer, the computer is enabled to perform the method according to any one of the foregoing aspects.

According to a sixth aspect, an embodiment of this application further provides a chip system, where the chip system includes a processor and a memory, and the processor and the memory are electrically coupled. The memory is configured to store computer program instructions. The processor is configured to execute some or all of the computer program instructions in the memory. When the some or all of the computer program instructions are executed, the method according to any one of the foregoing aspects is implemented.

In a possible design, the chip system further includes a transceiver. The transceiver is configured to send a signal processed by the processor, or receive a signal and input the signal to the processor. The chip system may include a chip, or may include a chip and another discrete device.

According to a seventh aspect, an embodiment of this application further provides a computer-readable storage medium, where the computer-readable storage medium stores a computer program, and when the computer program is run, the method according to any one of the foregoing aspects is implemented.

According to an eighth aspect, an embodiment of this application further provides a communication system. The system may include a first communication apparatus that performs the method according to the first aspect or any one of the possible implementations of the first aspect, and a second communication apparatus that performs the method according to the second aspect or any one of the possible implementations of the second aspect.

For technical effects that can be achieved by any one of the second aspect to the eighth aspect and any one of the possible implementations of the second aspect to the eighth aspect, reference may be made to descriptions of technical effects that can be brought by the first aspect and corresponding implementations of the first aspect. Details are not described herein again.

### BRIEF DESCRIPTION OF DRAWINGS

FIG. 1 is an architectural diagram of a network system applicable to an embodiment of this application;
FIG. 2, FIG. 3b, and FIG. 6 each are a schematic diagram of a communication procedure applicable to an embodiment of this application;
FIG. 3a, FIG. 3c, FIG. 4a, and FIG. 4b each are a schematic diagram of constellation diagram design applicable to an embodiment of this application;
FIG. 5a and FIG. 5b each are a schematic diagram of a constellation diagram applicable to an embodiment of this application; and
FIG. 7 and FIG. 8 each are a structural diagram of a communication apparatus applicable to an embodiment of this application.

### DESCRIPTION OF EMBODIMENTS

The following further describes the present invention in detail with reference to accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompany drawings. Besides, a combination of these solutions may also be used.

In addition, the word "example" in embodiments of this application is used to represent giving an example, an illustration, or a description. Any embodiment or design described as an "example" in this application should not be explained as being more preferred or having more advantages than another embodiment or design. Specifically, the term "example" is used for presenting a concept in a specific manner.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that with evolution of the network architecture and emergence of a new service scenario, the technical solutions provided in embodiments of this application are also applicable to similar technical problems.

The following describes some terms in embodiments of this application, to facilitate understanding of a person skilled in the art.
(1) A terminal device is a device that provides a voice and/or data connectivity for a user. Specifically, the terminal device is a device that provides a voice for the user, or is a device that provides data connectivity for the user, or is a device that provides a voice and data connectivity for the user. For example, the terminal device may be a handheld device with a wireless connection function, or a processing device connected to a wireless modem. The terminal device may communicate with a core network through a radio access network (radio access network, RAN), and exchange a voice or data with the RAN, or interact a voice and data with the RAN. The terminal device may be user equipment (user equipment, UE), a wireless terminal device, a mobile terminal device, a device-to-device (device-to-device, D2D) terminal device, a vehicle-to-everything (vehicle to everything, V2X) terminal device, a machine-to-machine/machine type communication (machine-to-machine/machine-type communication, M2M/MTC) terminal device, an internet of things (internet of things, loT) terminal device, a light terminal equipment (light UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal equipment may be a mobile phone (or referred to as a "cellular" phone), a computer with a mobile terminal device, or a portable, pocket-sized, handheld, or computer built-in mobile apparatus. For example, the terminal device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively be a limited device such as a device with low power consumption, a device with a limited storage capability, or a device with a limited computing capability. For example, the terminal device may be an information sensing device such as a barcode, a radio frequency identification (radio frequency identification, RFID), a sensor, a global positioning system (global positioning system, GPS), or a laser scanner.

As an example instead of a limitation, the terminal device may alternatively be a wearable device in embodiments of this application. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not merely a hardware device, but is used to implement a powerful function through software support, data interaction, and cloud interaction. In a board sense, wearable intelligent devices include full-featured and large-sized devices that can implement all or some functions without depending on smartphones, for example, smart watches or smart glasses, and include devices that focus on only one type of application function and need to work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all perceived as vehicle-mounted terminal devices. The vehicle-mounted terminal device is also referred to as, for example, an on-board unit (on-board unit, OBU).

In embodiments of this application, the terminal device may alternatively be a relay (relay). It may be understood that any device that can perform data communication with a base station may be perceived as a terminal device.

In embodiments of this application, an apparatus configured to implement a function of the terminal device may be a terminal device, or may be an apparatus that can support the terminal device in implementing the function, for example, a chip system. The apparatus may be installed in the terminal device. In embodiments of this application, the chip system may include a chip, or may include a chip and another discrete device. In the technical solutions provided in embodiments of this application, the technical solutions provided in embodiments of this application are described by using an example in which the apparatus configured to implement the function of the terminal is a terminal device.

(2) A network device may be, for example, an access network (access network, AN) device such as a base station (for example, an access point). The access network device may be a device that is in an access network and that communicates with a wireless terminal device over an air interface through one or more cells. The network device may alternatively be, for example, a road side unit (road side unit, RSU) in a vehicle-to-everything (vehicle-to-everything, V2X) technology. The base station may be configured to perform mutual conversion between a received over-the-air frame and an IP packet, and may serve as a router between a terminal device and a remaining part of an access network. The remaining part of the access network may include an IP network. The RSU may be a fixed infrastructure entity supporting a V2X application, and may exchange a message with another entity supporting the V2X application. The network device may further coordinate attribute management of an air interface. For example, the network device may be an evolved NodeB (NodeB, eNB, or e-NodeB, evolutional NodeB) in a long term evolution (long term evolution, LTE) system or a long term evolution-advanced (long term evolution-advanced, LTE-A) system, or may be a next generation NodeB (next generation NodeB, gNB) in a fifth generation (5th generation, 5G) NR mobile communication system (or referred to as an NR system for short), or may include a central unit (central unit, CU) and a distributed unit (distributed unit, DU) in a cloud radio access network (cloud radio access network, Cloud RAN) system, or may be an apparatus functioning as a network device in a future communication system. This is not limited in embodiments of this application.

The network device may alternatively be a core network device. The core network device includes, for example, an access and mobility management function (access and mobility management function, AMF) or a user plane function (user plane function, UPF).

The network device may be an apparatus functioning as a network device in a device-to-device (Device to Device, D2D) communication system, a machine-to-machine (Machine to Machine, M2M) communication system, an internet of vehicles system, or a satellite communication system.

(3) A constellation diagram is used by a communication apparatus to modulate a signal during sending, and is also used by the communication apparatus to demodulate a signal during receiving. Therefore, a receiver and a transmitter need to use a same constellation diagram for communication. Generally, the constellation diagram may be used to define an amplitude and a phase of a signal element, and digital modulation may distinguish signals by amplitudes and phases. In the constellation diagram, one signal element may be represented by one constellation point, and each combination of an amplitude and a phase may be represented as one constellation point. For example, a horizontal x axis of the constellation diagram is related to an in-phase carrier, and a vertical y axis of the constellation diagram is related to an orthogonal carrier.

Quantities and coordinates of constellation points may be different in constellation diagrams of different modulation and demodulation schemes. For example, the modulation and demodulation schemes include quadrature phase shift keying (quadrature phase shift keying, QPSK), 16 quadrature amplitude modulation (quadrature amplitude modulation, QAM), or 64QAM. When there are x constellation points in a constellation diagram, it means that each of the constellation points may represent log₂ (x)-bit binary information. In other words, the constellation diagram corresponds to a modulation level of log₂ (x). For example, there are four constellation points in a QPSK constellation diagram. Each of the constellation points may represent 2-bit binary information. Each of the points may also be perceived as a code with 2-bit binary information. Codes corresponding to the four constellation points are 00, 01, 10, and 11. Coordinates of the four constellation points may be designed as [1, 1], [-1, 1], [1, -1], and [-1, -1]. Considering energy normalization, x and y coordinates of each of the constellation points may be further divided by √2.

During modulation, to-be-sent binary information is encoded and then mapped to a constellation point in a constellation diagram, to implement digital modulation (also referred to as constellation modulation). During demodulation, a signal sent by the transmitter is determined based on a distance between a received signal and each constellation point in the constellation diagram, to obtain data through correct demodulation. For example, during demodulation of a received QPSK signal, if the QPSK signal is closest to a point 00 among the four constellation points in the constellation diagram, it may be determined that the received QPSK signal is 00. For another example, the four constellation points in the QPSK constellation diagram are symmetrically distributed in four quadrants. The receiver may demodulate a received signal by determining a quadrant in which the signal is located.

When a design of the constellation diagram satisfies a property of Gray codes, codes represented by adjacent constellation points in the constellation diagram differ by only 1 bit as much as possible. In this case, it can be ensured that when a constellation point is mistaken as a code adjacent to the constellation point, the fewest bits are mistaken. In other words, a BER may be minimized.

Communication performance is affected by a modulation scheme. The modulation scheme includes the following designs: In design a, constellation points for modulation are designed based on assumptions about bits that are random and of equal probabilities and a channel with additive white Gaussian noise (additive white Gaussian noise, AWGN), so that adjacent constellation points satisfy the property of the Gray codes. In design b, methods such as constellation shaping and probabilistic shaping are used to improve the communication performance. In manner a, a constellation diagram is designed in an ideal case, and cannot well adapt to an actual communication scenario. In manner b, a constellation mapping with unequal probabilities is further designed when a designed constellation diagram is used. Locations of constellation points do not change. Only a probability of a mapping is changed. A fixed design of a constellation diagram is used in an existing communication system. In other words, locations of constellation points in the constellation diagram are fixed. Two communication parties store the fixed constellation diagram, and may perform modulation and demodulation in communication by using the fixed constellation diagram.

With development of communication technologies and communication scenarios, a requirement for communication system performance is getting higher, and a plurality of vertical application scenarios (such as an industrial internet and an internet of vehicles) emerge. This sets a higher design requirement for a constellation diagram. The fixed constellation diagram cannot adapt to a changing communication scenario and cannot meet a changing requirement for communication performance. As a result, communication performance is relatively poor in an actual communication process.

In this application, a constellation diagram used by a communication device during communication may adaptively change based on different communication scenarios. In other words, different constellation diagrams have different performance in different scenarios, and a constellation diagram that better matches a current scenario may be designed, to maximize network performance. Optionally, a constellation diagram designer may be used to design a constellation diagram based on different scenarios. The constellation diagram designer uses related information of a current scenario as the most basic input, and outputs a constellation diagram adapting to the scenario. A process of designing a constellation diagram by the constellation diagram designer may be implemented based on deep reinforcement learning.

(4) Deep reinforcement learning (deep reinforcement learning, DRL) combines a deep neural network and reinforcement learning.

The deep neural network has an input layer and an output layer, and has at least one hidden layer between the input layer and the output layer. Processing using a nonlinear activation function such as a rectified linear unit (rectified linear unit, ReLU) function or a tanh function may follow the hidden layer. The input layer, the output layer, and the hidden layer may be all referred to as network layers, or layers for short. Connections between the layers are established by connecting nodes in the layers. A pair of connected nodes has a weight and a bias. The deep neural network may be perceived as a nonlinear transformation from an input to an output. Output may further calculate a loss by using a loss function (loss function). A gradient generated through calculation may be propagated back from the output layer to the input layer by using a back-propagation (back-propagation) algorithm, so as to update a weight and a bias of each layer and minimize the loss.

Reinforcement learning is a process in which an agent (agent) interacts with an environment and learns an optimal policy through trial and error (or exploration). Reinforcement learning can provide a solution especially for a problem with a series of decisions that is difficult to solve or for which theoretical modeling cannot be performed. Reinforcement learning may also include the following concepts: state (or observation), policy, return (also referred to as reward), time step, episode, and value function. The agent may perform an action/action on the environment based on a state fed back by the environment, to obtain a state of a next moment and a return. A goal is to enable the agent to accumulate a maximum return in a period of time (that is, to maximize a total return of each episode). A policy determines an action to be taken by the agent in a given state. Therefore, the policy may be perceived as a mapping from the state to the action. During deep reinforcement learning, an observation may be an input of the deep neural network, and an action may be correspondingly an output of the deep neural network. A return (value) is a value fed back by the environment after the agent takes an action in the current environment, namely, an evaluation of the action taken by the agent. At each time step, the agent takes an action, and then the environment feeds back a return value. A problem encountered is often not solved by optimizing a single action, but by a final result or a comprehensive result brought by optimizing a series of decisions. Therefore, a problem may be optimized by episodes during reinforcement learning, and each episode includes a plurality of time steps. The environment may feed back a return value at a time step at the end of each episode. In this case, a return value of each time step before the end of each episode may be replaced with zero. Alternatively, the environment may feed back a non-zero return value before the end of each episode, where different environments correspond to different feedback manners. A value function is also a mapping. An input of the value function may be a state or a set of a state and an action. An output of the value function is a value, that is, a value estimated by the agent of a total return that can be accumulated in the future. The greater this value is, the better a currently selected action is. During deep reinforcement learning, the value function may also be represented by the deep neural network. The input of the value function is the input of the deep neural network, and the output of the value function is the output of the deep neural network.

(5) The terms "system" and "network" may be used interchangeably in embodiments of this application. "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B each may be singular or plural. The character "/" generally indicates an "or" relationship between the associated objects. "At least one of the following items" or a similar expression thereof indicates any combination of these items, including any combination of a singular item or a plurality of items. For example, at least one of a, b, or c may indicate: a, b, c, a and b, a and c, b and c, or a, b, and c, where a, b, and c each may be singular or plural.

In addition, unless otherwise stated, ordinal numbers such as "first" and "second" in embodiments of this application are intended to distinguish between a plurality of objects, but not intended to limit a sequence, a time sequence, a priority, or an importance degree of the plurality of objects. For example, a first data packet and a second data packet are merely intended to distinguish between different data packets, but do not indicate a difference between the two data packets in content, priority, sending order, importance degree, or the like.

The communication method provided in embodiments of this application may be applied to various communication systems, for example, satellite communication systems, internet of things (internet of things, loT) systems, narrowband internet of things (narrowband internet of things, NB-IoT) systems, global systems for mobile communication (global systems for mobile communication, GSM), enhanced data rates for GSM evolution (enhanced data rates for GSM evolution, EDGE) systems, wideband code division multiple access (wideband code division multiple access, WCDMA) systems, code division multiple access 2000 (code division multiple access, CDMA2000) systems, time division-synchronous code division multiple access (time division-synchronous code division multiple access, TD-SCDMA) systems, long term evolution (long term evolution, LTE) systems, fifth generation (5G) communication systems, such as 5G new radio (new radio, NR) and three application scenarios of the 5G mobile communication systems: enhanced mobile broadband (enhanced mobile broadband, eMBB), ultra-reliable low-latency communication (ultra-reliable low-latency communication, URLLC), and massive machine type communication (massive machine type communication, mMTC), or other communication systems or future communication systems.

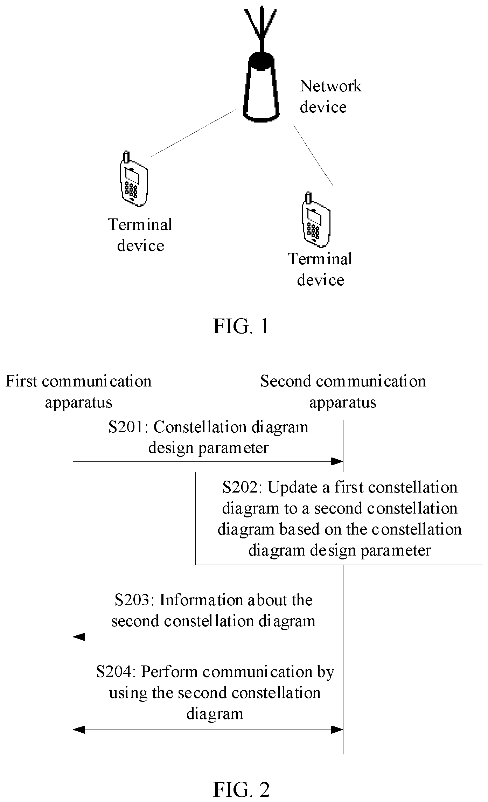

To facilitate understanding of embodiments of this application, a network architecture shown in FIG. 1 is used to describe an application scenario of embodiments of this application. The network architecture may be applied to the foregoing various communication systems. The network architecture shown in FIG. 1 includes a network device and a terminal device. The network device and the terminal device communicate with each other by using a constellation diagram. There may be one or more network devices, and there may be one or more terminal devices (as shown in FIG. 1, there are two terminal devices). Types and quantities of network devices and terminal devices are not limited in embodiments of this application.

Current communication standards specify fixed constellation diagram designs for use. For example, an agreed fixed first constellation diagram is used when a modulation and demodulation scheme is QPSK, and an agreed fixed second constellation diagram is used when a modulation and demodulation scheme is 16QAM. With development of communication technologies and communication scenarios, a requirement for communication system performance is getting higher, and a plurality of vertical application scenarios (such as an industrial internet and an internet of vehicles) emerge. A fixed constellation diagram cannot adapt to a changing communication scenario and cannot meet a changing requirement for communication performance. As a result, communication performance is relatively poor in an actual communication process.

On this basis, an embodiment of this application provides a communication method. The communication method provided in this embodiment of this application is applicable to the communication system shown in FIG. 1. In this method, a communication apparatus may perform, based on related information of a current scenario, adaptive design on a constellation diagram used for communication. This can ensure that a constellation diagram that better matches the current scenario is designed, thereby improving communication network performance. The related information of the scenario may be understood as a constellation diagram design parameter of a constellation diagram designer. As shown in FIG. 2, a specific procedure of the communication method may include the following steps.

S201: A first communication apparatus sends a constellation diagram design parameter, and a second communication apparatus receives the constellation diagram design parameter, where the constellation diagram design parameter includes a communication scenario design parameter and a communication apparatus design parameter.

The first communication apparatus may be a terminal device or a network device. For example, the first communication apparatus is a terminal device. The second communication apparatus may be a terminal device or a network device. For example, the second communication apparatus is a network device (such as a base station).

In an example, the first communication apparatus may unsolicitedly send the constellation diagram design parameter. For example, the first communication apparatus may periodically obtain a constellation diagram design parameter, and then send the obtained constellation diagram design parameter to the second communication apparatus. For another example, when a radio resource control (radio resource control, RRC) connection is established between the first communication apparatus and the second communication apparatus, the first communication apparatus obtains a constellation diagram design parameter, and then sends the obtained constellation diagram design parameter to the second communication apparatus.

In another example, the second communication apparatus may send a first message to the first communication apparatus. The first message is used to query whether the first communication apparatus supports to update a constellation diagram. In other words, the first message is used to query whether the first communication apparatus has a capability to update the constellation diagram. Alternatively, the first message is used to notify/indicate/request the first communication apparatus to send the constellation diagram design parameter.

Optionally, before the second communication apparatus sends the first message, the first communication apparatus may further unsolicitedly request the second communication apparatus to update the constellation diagram.

If the first message is used to query whether the first communication apparatus supports to update the constellation diagram, the first communication apparatus may feed back capability information to the second communication apparatus, to indicate whether the first communication apparatus supports to update the constellation diagram. For example, a newly added updateConstellation field may be used to indicate whether the first communication apparatus supports to update the constellation diagram. When a value of the updateConstellation field is true, it indicates that the first communication apparatus supports to update the constellation diagram. When a value of the updateConstellation field is false, it indicates that the first communication apparatus does not support to update the constellation diagram. If the first communication apparatus supports to update the constellation diagram, the first communication apparatus may subsequently send the constellation diagram design parameter on an uplink. Generally, that the first communication apparatus supports to update the constellation diagram is, for example, hardware of the first communication apparatus supports to update the constellation diagram used for communication, or hardware of the first communication apparatus supports to obtain the constellation diagram design parameter. Optionally, the core network device may further perform authentication on the capability information of the first communication apparatus.

If the first message is used to notify/indicate/request the first communication apparatus to send the constellation diagram design parameter, the first communication apparatus sends the constellation diagram design parameter to the second communication apparatus as notified/indicated/requested by the first message.

Before S201, the first communication apparatus and the second communication apparatus may communicate with each other by using a first constellation diagram. For example, the first constellation diagram may be a fixed constellation diagram specified in a current standard. For another example, the first constellation diagram may be a constellation diagram generated based on a constellation diagram design parameter.

Optionally, in S201, the first communication apparatus sends the constellation diagram design parameter by using the first constellation diagram, and the second communication apparatus receives the constellation diagram design parameter by using the first constellation diagram.

Generally, a user moves in a process of using a terminal device, but a network device does not move after deployment. Therefore, the constellation diagram design parameter may be mainly related to the first communication apparatus. For example, a communication apparatus involved in the communication scenario design parameter and the communication apparatus design parameter is mainly the first communication apparatus. However, this does not mean that impact of a design parameter related to the second communication apparatus on a constellation diagram design is not considered.

The communication scenario design parameter includes at least one piece of the following information: related information of a scenario (context) such as a channel characteristic, environment visualization information, time, and weather.

The channel characteristic is a description of a channel environment in which the communication apparatus is located, and may be a result of statistics collected over a period of time. The channel characteristic may include a channel environment type indication, for example, indication information that can reflect different channel characteristics, such as city, countryside, office A, street B, and home C. For example, if a communication device is at home for half of a day and at an office for half of a day, information such as home, 0.5, office, and 0.5 may be used as a channel environment type indication. The channel characteristic may include a channel model indication. A plurality of channel models may be stored in a communication system, and the channel models may correspond to different scenarios. A channel model indication is provided, so that a constellation diagram designer can be notified of a channel characteristic of a current scenario. To reduce signaling overheads, some replacement parameters in a known channel model may also be sent. The channel characteristic may be a channel model obtained by statistics collection, or may be a channel model determined based on a method such as ray tracing, or may be a channel model implemented by using a neural network. It may be understood that the communication apparatus in this embodiment of this application includes the first communication apparatus and/or the second communication apparatus.

The channel environment type indication may provide a general understanding of the channel characteristic. The environment visualization information may further describe a scenario. Consequently, a constellation diagram designed by the constellation diagram designer is more accurate. Providing the environment visualization information helps the communication system to establish a model for an environment by using the ray tracing method. Then, the model for the environment is used to establish a channel model or is used as an input of a channel model. The environment visualization information is used to describe a size and a location of an object in space, and may include one or more of an image collected in the environment, a depth map, point cloud data, or a three-dimensional image.

Different constellation diagrams are designed based on different constellation diagram design parameters. Therefore, optimal constellation diagrams may be explored for different scenarios, to ensure that constellation diagram performance can be further improved. Constellation diagrams that best match current scenarios may be designed by selecting different constellation diagram design parameters.

The communication apparatus design parameter includes at least one piece of the following information: a user behavior profile, a constellation diagram designer return parameter, or a constellation diagram designer training parameter.

The user behavior profile (user behavior profile) indicates a behavior preference of a user in a period of time. Therefore, the user behavior profile may be represented by a distribution, and the distribution is statistics collected over the period of time. The user behavior profile may include a location distribution of the communication apparatus. The location distribution may be statistics on a change in a geographical location of the communication apparatus over the period of time. The user behavior profile may include a service type of the communication apparatus. The service type is a situation, on which statistics are collected over the period of time, of a type of a service used by the communication apparatus, for example, a voice service or a data service. The data service may be classified into a game type or virtual reality (virtual reality, VR) type that has a relatively high requirement for a latency, and/or a web page type or the like that has a relatively low requirement for a latency. The service type may affect a distribution of received data, namely, a source distribution. The user behavior profile may include a mobility distribution of the communication apparatus. The mobility distribution is statistics on mobility of the communication apparatus over the period of time. The mobility is how fast or slow the communication apparatus moves, for example, immobility, low mobility, or high mobility. Alternatively, the mobility may be a specific speed of movement. The user behavior profile may include physical layer configuration information. The physical layer configuration information may be obtained by statistics collection over the period of time. The physical layer configuration information may include one or more of a bit rate, an encoder or decoder type, a filter type, waveform information, pilot information, an antenna configuration, precoding information, and the like. The user behavior profile includes a radio frequency link hardware parameter distribution of the communication apparatus. The radio frequency link hardware parameter distribution is statistics on a change in the hardware parameter over the period of time. The radio frequency link hardware parameter includes one or more pieces of hardware-related information such as a unique device identifier used by a communication device, an international mobile subscriber identity (international mobile subscriber identity, IMSI), a device model, an antenna model, precision of a digital-to-analog converter (digital-to-analog converter, DAC)/an analog-to-digital converter (analog-to-digital converter, ADC) in a radio frequency link, and a duplex working mode.

The constellation diagram designer return parameter includes at least one piece of the following information: performance fed back by the communication apparatus, performance calculated by the constellation diagram designer, or a formula used to evaluate constellation diagram performance. The performance relates to an indicator that affects communication system performance, such as a throughput, a bit error rate, a data rate, or a peak-to-average power ratio (peak-to-average power ratio, PAPR). The performance may also relate to a key performance indicator (key performance indicator, KPI) fed back by the communication apparatus, such as a capacity, quality of service, a latency, and call drop statistics. The formula for evaluating the constellation diagram performance may be a formula for calculating whether the constellation diagram satisfies a Gray code, a formula for calculating a code distance of the constellation diagram, or another evaluation formula that can reflect performance of the constellation diagram in the communication system.

The constellation diagram designer training parameter includes at least one piece of the following information: a convergence condition of training, a quantity of episodes of training, a time step included in each episode, a quantity of iterations of training, coordinate ranges of constellation points, or a quantity of to-be-trained constellation points.

When the constellation diagram designer reaches the convergence condition of training, it may be perceived that the constellation diagram designer converges. The convergence condition of training may be that the quantity of iterations of training is reached, or may be that the quantity of episodes of training is reached, or may be that decoding performance is not improved any more. All or some constellation points in the constellation diagram may be explored by setting the quantity of to-be-trained constellation points. When some constellation points are explored, resource consumption caused by deep reinforcement learning can be reduced, and it can be ensured that performance of a constellation diagram obtained by exploration does not deteriorate too much compared with performance of the original first constellation diagram. The coordinates of the constellation points may be restricted to specific value ranges by setting the coordinate ranges of the constellation points. This ensures that performance of the constellation diagram obtained by exploration is not too poor.

The constellation diagram designer may predict the scenario by using the constellation diagram design parameter. For example, the constellation diagram designer may infer a possible future scenario based on a historical scenario, and design a constellation diagram based on the possible future scenario.

S202: The second communication apparatus updates the first constellation diagram to the second constellation diagram based on the constellation diagram design parameter, where the second constellation diagram corresponds to the constellation diagram design parameter.

The second constellation diagram is used by the first communication apparatus and the second communication apparatus to communicate with each other. Alternatively, the second constellation diagram is used by the first communication apparatus and the second communication apparatus to implement modulation and demodulation. The second constellation diagram is different from the first constellation diagram. Optionally, a quantity of constellation points in the second constellation diagram is the same as a quantity of constellation points in the first constellation diagram, but coordinates of the constellation point in second constellation diagram are different from coordinates of the constellation point in the first constellation diagram. The constellation points in the second constellation diagram may be irregularly distributed, or may be symmetrically distributed.

There is a constellation diagram designer in a communication link. For example, the second communication apparatus may be provided with a constellation diagram designer. The constellation diagram designer may use a deep reinforcement learning method. An input of the constellation diagram designer is related information of the scenario, namely, the constellation diagram design parameter. An output of the constellation diagram designer is the second constellation diagram. This manner of determining a constellation diagram based on a scenario may be perceived as designing of a targeted constellation diagram.

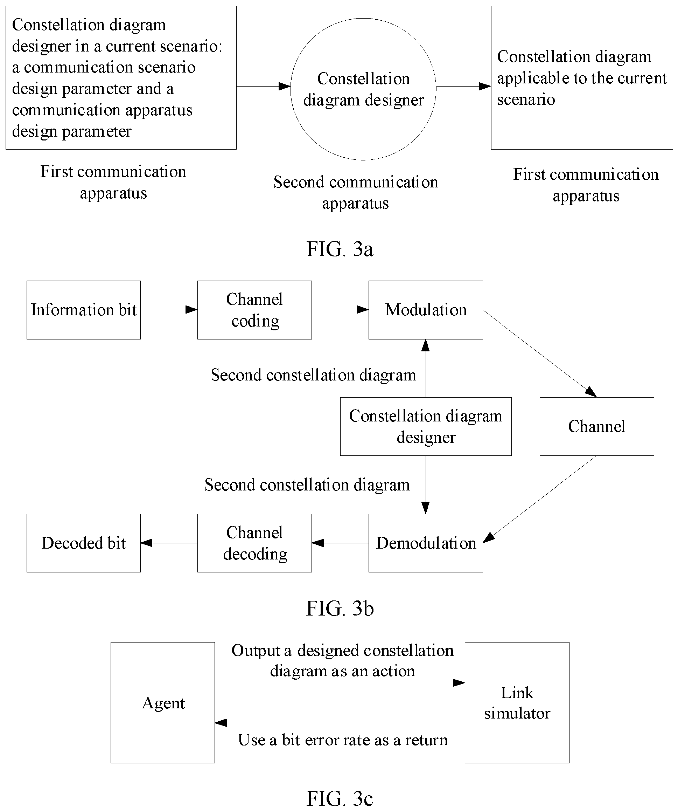

As shown in FIG. 3a, in S202, the first communication apparatus sends the constellation diagram design parameter to the first and second communication apparatuses. The second communication apparatus inputs the constellation diagram design parameter to the constellation diagram designer. The second communication apparatus may generate the second constellation diagram based on the constellation diagram designer. Then, the second communication apparatus may update the first constellation diagram to the second constellation diagram. The second constellation diagram is a constellation diagram applicable to the current scenario. The second communication apparatus may send the second constellation diagram to the first communication apparatus.

For a process of generating the second constellation diagram based on the constellation diagram designer, refer to the following detailed description.

S203: The second communication apparatus sends information about the second constellation diagram, and the first communication apparatus receives the information about the second constellation diagram.

The information about the second constellation diagram may be identification information of the second constellation diagram, or the coordinates of the constellation points in the second constellation diagram, or the like.

After the first communication apparatus receives the information about the second constellation diagram, the first communication apparatus may send a second message to the second communication apparatus. The second message is used for requesting to switch to an updated constellation diagram (namely, the second constellation diagram) for communication. The second communication apparatus initiates RRC connection reconfiguration. After the RRC connection reconfiguration is completed, the first communication apparatus and the second communication apparatus may communicate with each other by using the updated constellation diagram.

S204: The first communication apparatus and the second communication apparatus communicate with each other by using the second constellation diagram.

FIG. 3b shows a process of performing communication by using the updated second constellation diagram. A transmitter performs channel coding on a to-be-sent information bit; modulates, by using the second constellation diagram, a signal obtained by coding; and sends a signal obtained by modulation to a receiver on a channel. The second constellation diagram is generated based on the constellation diagram designer. The receiver demodulates the received signal by using the second constellation diagram, and performs channel decoding on a signal obtained by demodulation, to obtain a decoded bit. The decoded bit may be perceived as information sent by the sender.

A constellation diagram designed through deep reinforcement learning is not limited by a rule. Therefore, there is a high probability that the designed constellation diagram is irregular. Demodulation with the irregular constellation diagram is more complex than demodulation with a regular constellation diagram. There is no regularity in distributions/locations/coordinates of constellation points in the irregular constellation diagram, but there is a regularity in distributions/locations/coordinates of constellation points in the regular constellation diagram (for example, the constellation points are symmetrically distributed). In this case, the first communication apparatus may further replace the second constellation diagram with a third constellation diagram, and the second communication apparatus may also replace the second constellation diagram with the third constellation diagram. The third constellation diagram is a constellation diagram that is in a preset constellation diagram and that is closest to the second constellation diagram. For example, the preset constellation diagram may be a regular constellation diagram. Specifically, the third constellation diagram may be a constellation diagram in the regular constellation diagram, where the constellation diagram and the second constellation diagram have a same quantity of constellation points, and coordinates of constellation points in the constellation diagram are closest to the coordinates of the constellation points in the second constellation diagram. After the first communication apparatus and the second communication apparatus replace the second constellation diagram with the third constellation diagram, the first communication apparatus and the second communication apparatus may further communicate with each other by using the third constellation diagram.

If the first communication apparatus and the second communication apparatus cannot communicate with each other by using the second constellation diagram, or a degree of performance degradation significantly exceeds a first threshold after the first communication apparatus and the second communication apparatus communicate with each other by using the second constellation diagram, a rollback mechanism may be used to switch back from the new second constellation diagram to the original first constellation diagram. The first threshold is used to indicate the degree of performance degradation of the communication system. A value of the first threshold is not limited in this embodiment of this application. Optionally, the rollback mechanism may be initiated by the second communication apparatus. The second communication apparatus sends indication information to the first communication apparatus. The indication information is used to indicate to use the rollback mechanism. The rollback mechanism is used to indicate to replace the second constellation diagram with the first constellation diagram. Optionally, the rollback mechanism may be initiated by the first communication apparatus. The first communication apparatus sends a first request message to the second communication apparatus. The first request message is used to request to use the rollback mechanism. The rollback mechanism is used to indicate to replace the second constellation diagram with the first constellation diagram. After RRC connection reconfiguration is completed, the first communication apparatus and the second communication apparatus may communicate with each other by using the first constellation diagram.

It may be understood that a process of designing a constellation diagram may occur online during use of a communication apparatus. In other words, the communication apparatus designs and updates to the constellation diagram online when the communication apparatus is operating in a changing environment and a changing scenario. Alternatively, a targeted constellation diagram may be designed offline based on a specific scenario. For example, when a communication apparatus is being produced, it is determined that the communication apparatus is going to be applied to a specific scenario, and the scenario basically does not change. In this case, a constellation diagram may be designed for the scenario in advance. However, offline design is generally not as flexible as online design. Most communication apparatuses operate in a changing environment or in a changing scenario. Designing and updating to a constellation diagram online can provide greater flexibility, so that the communication apparatus always operates with high performance. Therefore, online designing of a constellation diagram or offline designing of a constellation diagram may be selected based on an actual requirement.

The constellation diagram designer uses the related information of the scenario as the input. Therefore, a same constellation diagram may be returned for same or similar "related information of the scenario". Therefore, a mapping table may be stored during implementation of constellation diagram design, and a constellation diagram obtained through deep reinforcement learning is stored in the mapping table. In this way, a corresponding constellation diagram may be directly determined by looking up the table based on an obtained constellation diagram design parameter. Both the first communication apparatus and the second communication apparatus may store the mapping table. The first communication apparatus and the second communication apparatus may periodically update the mapping table, or select, based on a constellation diagram sequence number in the table, a corresponding constellation diagram for update. The mapping table may be Table 1. Table 1 stores some correspondences between constellation diagram design parameters and constellation diagrams, and a sequence number/identification information is allocated to each of the correspondences. In a correspondence numbered 1, a constellation diagram design parameter includes: source distribution x being a source distribution, high-frequency indoor channel being a channel characteristic, bit rate of 0.5 being a physical layer configuration, 3-bit ADC being a hardware parameter, and constellation diagram A being a constellation diagram. In a correspondence numbered 2, a constellation diagram design parameter includes: source distribution y being a source distribution, low-frequency urban channel being a channel characteristic, bit rate of 0.75 being a physical layer configuration, full-duplex being a hardware parameter, and constellation diagram B being a constellation diagram.

**Table 1**

| No. | Source distribution | Channel characteristic | Physical layer configuration | Hardware parameter | Constellation diagram design |
|---|---|---|---|---|---|
| 1 | Source distribution x | High-frequency indoor channel | Bit rate of 0.5 | 3-bit ADC | Constellation diagram A |
| 2 | Source distribution y | Low-frequency urban channel | Bit rate of 0.75 | Full-duplex | Constellation diagram B |
| ... | ... | ... | ... | ... | ... |

Specifically, the first communication apparatus and the second communication apparatus may store a correspondence between the constellation diagram design parameter and the second constellation diagram. Optionally, the first communication apparatus and the second communication apparatus may allocate identification information (for example, first identification information) to the correspondence. In a subsequent use process, the first communication apparatus and the second communication apparatus may further search, based on the constellation diagram design parameter, the correspondence for the second constellation diagram corresponding to the constellation diagram design parameter.

If the first communication apparatus and the second communication apparatus store the mapping table, the first communication apparatus and the second communication apparatus may first search the mapping table for a constellation diagram corresponding to the constellation diagram design parameter during constellation diagram design. If the mapping table does not include a constellation diagram corresponding to a specific constellation diagram design parameter, the second communication apparatus may generate the corresponding constellation diagram based on the constellation diagram design parameter.

The following describes in detail a process of generating the second constellation diagram based on the constellation diagram designer. The process of generating the second constellation diagram based on the constellation diagram designer may be perceived as a learning and training process of constellation diagram design. In this process, the constellation diagram design parameter may include the constellation diagram designer return parameter and/or a constellation diagram design training parameter.

In the learning and training process of constellation diagram design, an agent may attempt to generate a constellation diagram based on the constellation diagram design parameter obtained from the outside. An evaluator may evaluate performance of the constellation diagram that the agent attempts to generate, and determine whether the constellation diagram that the agent attempts to generate is a constellation diagram that best matches the current scenario. Specifically, the constellation diagram design parameter and the constellation diagram that the agent attempts to generate are used as inputs of the evaluator, and an evaluation condition of the evaluator is changed. The evaluator calculates a return again based on a changed evaluation condition. The agent may intend to increase the return. When the return does not increase any more, it is perceived that the agent converges. A constellation diagram that is output in the convergence state is a final constellation diagram, namely, the second constellation diagram. A state is a possible constellation diagram. An action is a change to the constellation diagram. A return is a value of a new constellation diagram, namely, performance of the constellation diagram after the action is performed.

The evaluator may be a link-level simulator, a system-level simulator, a theoretical calculation formula, a table lookup method, or statistics and a combination that are of actual communication situation. This is not limited in this embodiment of this application, provided that the evaluator can evaluate corresponding return values for different constellation diagrams. For example, the constellation diagram generated by the agent is input to the evaluator. The evaluator determines that the constellation diagram violates a rule of a known and reliable constellation diagram design, for example, does not satisfy a property of Gray codes. Then, the evaluator may directly output a relatively small return value for the constellation diagram without using a Monte Carlo simulation method. This reduces time consumption caused by a large amount of improper exploration. For another example, a plurality of network devices may share evaluation experience. When the constellation diagram generated by the agent is input to the evaluator, the evaluator may query a historical evaluation result of the device or one or more other network devices. If an evaluation result of a constellation diagram that is the same as or similar to the constellation diagram is found, the evaluation result may be directly used again. This can save time of Monte Carlo simulation, and reduce time consumption. For another example, two communication parties communicate with each other by using the constellation diagram generated by the agent. The evaluator collects statistics on a performance indicator (a parameter such as a throughput, a BER, a BLER, or a spectral efficiency) after the two communication parties communicate with each other by using the new constellation diagram, and feeds back the performance indicator to the agent as a return. The agent adjusts the generated constellation diagram based on the return until the agent converges.

When the evaluator is a link simulator, a process of interaction between the agent and the evaluator is shown in FIG. 3c. The agent outputs a designed constellation diagram as an action. The link simulator (namely, the evaluator) determines a bit error rate of the constellation diagram, and feeds back the bit error rate to the agent as a return.

Specifically, in a process of designing a constellation diagram through deep reinforcement learning, the agent first determines a modulation level of a to-be-generated constellation diagram. For example, the modulation level of the to-be-generated constellation diagram is 3. The constellation diagram includes 2³ = 8 constellation points. Each of the constellation points consists of two real numbers. Therefore, the designed constellation diagram has 8 x 2 = 16 real numbers. Two real numbers that constitute the constellation point may be an x coordinate value and a y coordinate value in a Cartesian coordinate system, or may be coordinate values, corresponding to an amplitude and a phase, in polar coordinates.

For the agent, a state in elements of deep reinforcement learning may be a 1 x 16 vector (or a vector with any dimensions that has 16 or more elements in total), or may be a 4 x 4 matrix (or a matrix with any dimensions that has 16 or more elements in total). Value of an element in the vector or the matrix may be any real number, and indicates a location coordinate of each constellation point in a constellation diagram.

An action in the elements of deep reinforcement learning is distributions of coordinates of constellation points determined at all time steps. For example, assuming that one constellation point is determined at each of the time steps, distributions of two coordinate values are involved. The distributions of the coordinate values may be Gaussian distributions. The Gaussian distributions each include two real numbers: an expectation and a variance. A deep neural network outputs 2 x 2 = 4 real numbers at each time step, where the real numbers may be any real numbers. However, space of any real numbers is too large for convergence of the agent. In addition, a constellation diagram is going to be normalized eventually. Excessively large space for exploring the real numbers is unnecessary. Therefore, a tanh activation function may be added before an output of the deep neural network, so that the real numbers that are output by the neural network each fall within [-1, 1]. In this case, it is feasible that expectations of the distributions of the coordinates of the constellation points each fall within [-1, 1], but variances of the distributions require processing. Assuming that variances that are output by the deep neural network each are w, a value of 2^(10 x w) may be used as each of the variances of the distributions. When a value of w falls within [-1, 1], the variance is greater than 0, and the variance may be an extremely small value or an extremely large value. With this setting, diversity of exploration can be ensured (an initial variance is relatively large), and exploration can converge eventually (the variance is getting smaller). The foregoing four distribution values form two Gaussian distributions, from which two real values may be sampled. The two real values are coordinate values eventually obtained at the time step.

At the beginning of an episode of training, a state may be all zeros or any initial values. The agent outputs coordinates of a constellation point based on the input state. The coordinates of the constellation point cause a change to the state. To be specific, values specified at the position that is of the constellation point and that is in a state vector change from initial values to the coordinates of the constellation point that are output by an action. In this example, after eight time steps when all constellation points have been designed, a constellation diagram design parameter and a final state, namely, a complete constellation diagram are input to the evaluator. In this example, the evaluator is a link simulator. The link simulator outputs decoding results of the constellation diagram and the constellation diagram design parameter as a return. The decoding result may be a BLER (whose value may be converted into, for example, log ₁₀(BLER)) or a BER. Whether the design of the constellation diagram satisfies a property of Gray codes depends on the BER. Therefore, the BER can be used as the return. It can be seen that the foregoing process reflects a process in which the agent interacts with the environment through an action. To be specific, the action is input to the environment, and changes the state; and then a feedback is obtained from the environment. At this time, one episode ends. A return of the episode is a return obtained at a last time step, because performance can be evaluated only after designing of a complete constellation diagram is finished. Certainly, coordinates of all constellation points may be output at one time step. In this case, one episode is one time step. Alternatively, only one coordinate value (a coordinate value of one constellation point on a horizontal axis or a coordinate value of one constellation point on a vertical axis) may be output at one time step. Therefore, it takes 16 time steps in one episode to design the complete constellation diagram in this example. It may be understood that a specific designing process can be changed based on different requirements for deep reinforcement learning.

In a plurality of episodes of training through deep reinforcement learning, a goal of the agent is to maximize a sum of decoding performance. In other words, the goal of the agent is to optimize the decoding performance and gradually converge. After a period of time of training, the decoding performance almost no longer increases. In this case, an episode with best decoding performance may be selected, an action of each time step in the episode is recorded, and coordinate values that are output at all time steps sequentially form a complete constellation diagram. The constellation diagram may be perceived as a constellation diagram designed through deep reinforcement learning for a current scenario.

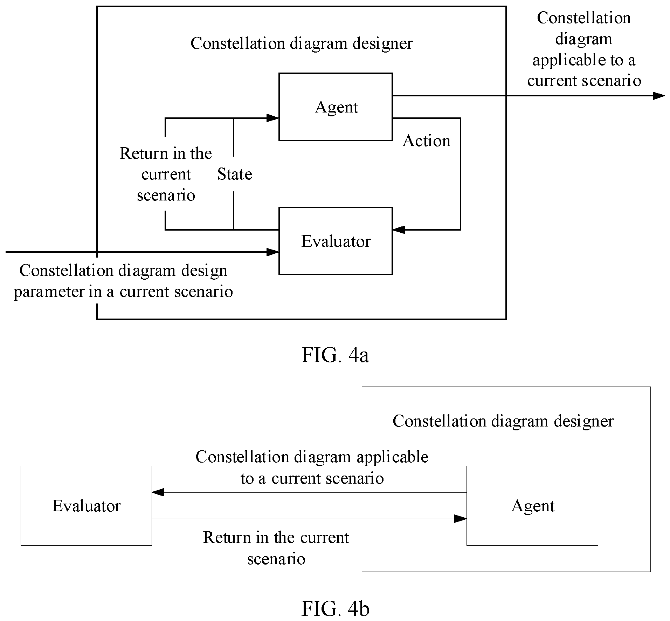

In an implementation, as shown in FIG. 4a, the constellation diagram designer includes the agent and the evaluator. In other words, the second communication apparatus includes both the agent and the evaluator.

In this case, the evaluator may include a channel simulator. When the constellation diagram design parameter includes a channel characteristic, the channel simulator in the evaluator may simulate the channel characteristic, output a channel value based on the channel characteristic, and provide the channel value to the link simulator in the evaluator. The channel characteristic may include a channel strength, a channel distribution, a multipath distribution, a delay, and the like.

The second communication apparatus may attempt to generate a constellation diagram by only obtaining a constellation diagram design parameter from the outside, and may evaluate the constellation diagram generated in the attempt.

In another implementation, as shown in FIG. 4b, the constellation diagram designer includes the agent. In other words, the second communication apparatus includes the agent, and the evaluator is located outside the second communication apparatus. For example, the second communication apparatus includes the agent, and the first communication apparatus includes the evaluator.

The second communication apparatus obtains a constellation diagram design parameter from the outside, attempts to generate a constellation diagram, and sends the constellation diagram generated in the attempt to the first communication apparatus. The first communication apparatus evaluates the constellation diagram. The second communication apparatus adjusts the constellation diagram based on an evaluation result/return until the agent converges.

Optionally, if there are a plurality of evaluators outside the second communication apparatus, the agent may simultaneously send a constellation diagram to the plurality of evaluators, and receive evaluation results from the plurality of evaluators.

As shown in FIG. 3b, an agent and an evaluator are located in different communication apparatuses. When the agent is disposed on a modulation side/transmitter, information about a new constellation diagram may be sent to a demodulation side/receiver through a channel. When the agent is disposed on a demodulation side/receiver, information about a new constellation diagram may be sent to a modulation side/transmitter through a channel.

A new constellation diagram obtained through deep reinforcement learning may be an irregular constellation diagram. A demodulation method based on the irregular constellation diagram may be different from a demodulation method based on a regular constellation diagram. If soft information is going to be output during demodulation with the new constellation diagram, it may be determined, by calculating a distance between a received signal and each constellation point, that a constellation point with a smallest distance is a constellation point obtained by demodulation. If soft information is going to be output during demodulation with the new constellation diagram, a distance between a received signal and each constellation point may be calculated, and then the soft information is calculated with reference to a common decoding algorithm. For example, the soft information may be calculated by using a max-log decoding method.

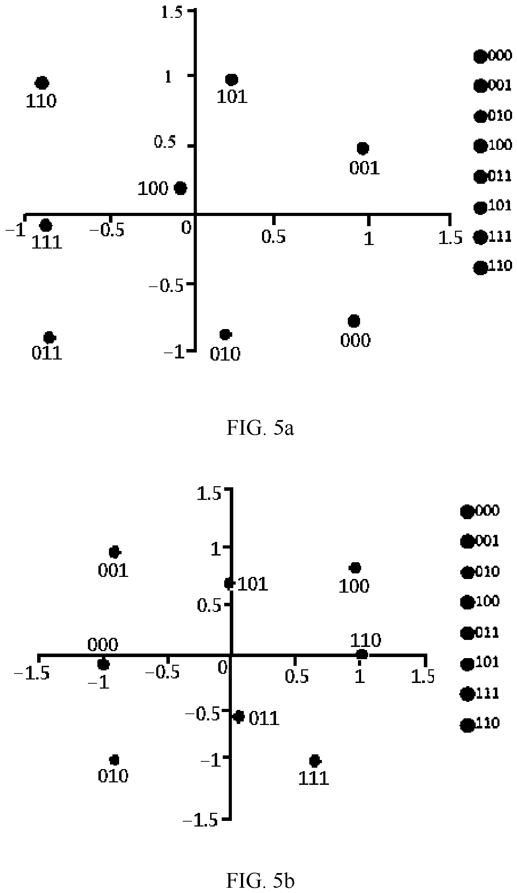

Different constellation diagrams are generated based on different information bit lengths. FIG. 5a and FIG. 5b each are a schematic diagram of a constellation diagram generated through deep reinforcement learning according to an embodiment of this application.

FIG. 5a shows 8QAM constellation diagram obtained through reinforcement learning when a 2-bit ADC is used in a link. Table 2 shows coordinate values of constellation points in the constellation diagram. It may be understood that the constellation points of a changed order in the constellation diagram still fall within the protection scope of the present invention, and scaled coordinate values of the constellation points or coordinate values that are obtained by fine tuning within a specific range and that are of the constellation points still fall within the protection scope of the present invention.

**Table 2**

| | | | | | | | | |
|---|---|---|---|---|---|---|---|---|
| Constellation point | 000 | 001 | 010 | 011 | 100 | 101 | 110 | 111 |
| Horizontal coordinate | 0.942 | 0.995 | 0.18 | -0.861 | -0.088 | 0.218 | -0.902 | -0.885 |
| Vertical coordinate | -0.78 | 0.484 | -0.874 | -0.902 | 0.191 | 0.979 | 0.959 | -0.081 |

FIG. 5b shows 8QAM constellation diagram obtained through reinforcement learning when a 3-bit ADC is used in a link. Table 3 shows coordinate values of constellation points in the constellation diagram. It may be understood that the constellation points of a changed order in the constellation diagram still fall within the protection scope of the present invention, and scaled coordinate values of the constellation points or coordinate values that are obtained by fine tuning within a specific range and that are of the constellation points still fall within the protection scope of the present invention.

**Table 3**

| | | | | | | | | |
|---|---|---|---|---|---|---|---|---|
| Constellation point | 000 | 001 | 010 | 011 | 100 | 101 | 110 | 111 |
| Horizontal coordinate | -1.011 | -0.922 | -0.922 | 0.047 | 0.956 | -0.029 | 1.003 | 0.639 |
| Vertical coordinate | -0.084 | 0.958 | -0.969 | -0.567 | 0.81 | 0.66 | 0.014 | -0.972 |

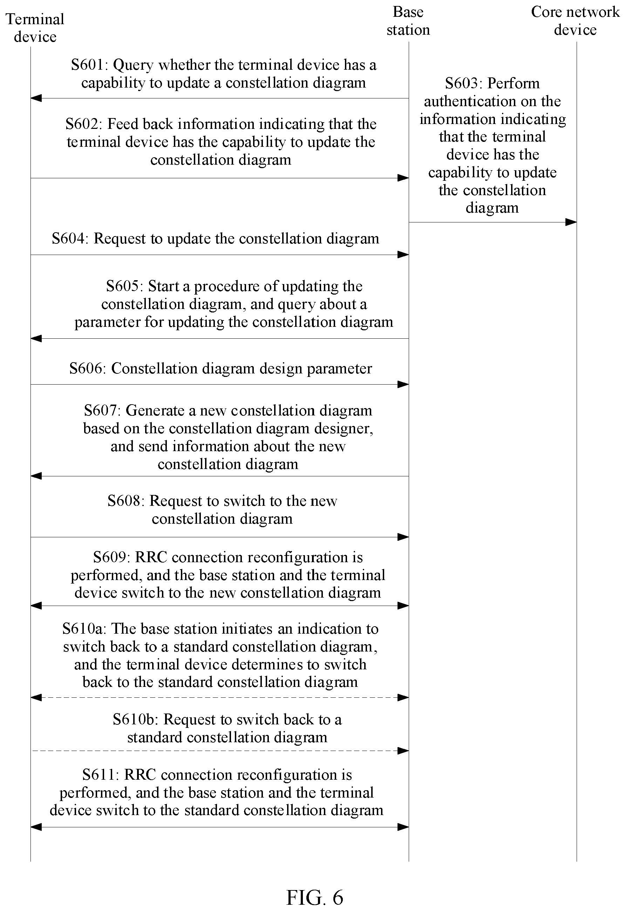

The following describes the communication method in the embodiment of this application with a specific embodiment shown in FIG. 6. The method includes the following steps.

S601: A base station queries whether a terminal device has a capability to update a constellation diagram.

S602: The terminal device feeds back information indicating that the terminal device has the capability to update the constellation diagram.

A field/signaling message may be further added in this embodiment of this application based on different specific use scenarios. As shown in Table 4, fields (IE)/group name (Group name) are newly added in this embodiment of this application, including an update constellation diagram flag bit (updateConstellationFlag) field, an update constellation diagram (updateConstellation) field, and a constellation diagram-related parameter (ConstellationRelatedParameters) field. A value range of the updateConstellationFlag field is a Boolean value 0 or 1. The updateConstellationFlag field is used to indicate whether the terminal device supports to update the constellation diagram. In other words, the updateConstellationFlag field is used to indicate whether the terminal device has the capability to update the constellation diagram. A value of the updateConstellation field is an integer within in a range of [0, 1024]. The updateConstellation field is used to indicate an updated constellation diagram. Therefore, the updateConstellation field may include coordinates of constellation points in the updated constellation diagram. The ConstellationRelatedParameters field is a set, and is a set of constellation diagram-related parameters. Therefore, the ConstellationRelatedParameters field may include a constellation diagram design parameter.

**Table 4**

| Field (IE/Group name) | Type and value (IE type and reference) of the field | Semantics description (Semantics description) of the field |
|---|---|---|
| Update constellation diagram flag bit (updateConstellationFlag) | Integer (0, 1) INTEGER (0, 1) | A Boolean value, indicating whether the terminal device supports to update the constellation diagram |
| Update constellation diagram (updateConstellation) | Integer (1-1024) INTEGER (1-1024) | Update the constellation diagram |
| Constellation diagram-related parameter (ConstellationRelatedParameters) | Set (Set) | A set of the constellation diagram-related parameters. |

In S602, the terminal device may indicate, by using the newly added updateConstellationFlag field in Table 4, whether the terminal device has the capability to update the constellation diagram. The value range of the updateConstellationFlag field may be a Boolean value 0 or 1. If a value of the updateConstellationFlag field is 1, it indicates that the terminal device has the capability to update the constellation diagram; or if a value of the updateConstellationFlag field is 0, it indicates that the terminal device does not have the capability to update the constellation diagram. Generally, the terminal device has the capability to update the constellation diagram in this embodiment of this application.

The base station may send the coordinates of the constellation points in the updated constellation diagram to the terminal device by using the newly added updateConstellation field in Table 4. The value of the updateConstellation field may be any real number. For example, the value of the updateConstellation field is any real number within a range of [-1.5, 1.5] as shown in FIG. 5a or FIG. 5b; or the value of the updateConstellation field is an integer within a range of [0, 1024] as shown in Table 4. It may be understood that, if a communication apparatus that generates the constellation diagram is the terminal device, the terminal device may also send the coordinates of the constellation points in the updated constellation diagram to the base station by using the updateConstellation field. Optionally, the updateConstellation field may be sent by using RRC signaling.

The terminal device may send the set of constellation diagram-related parameters, namely, the constellation diagram design parameter by using the newly added ConstellationRelatedParameters field in Table 4. The ConstellationRelatedParameters is a set.

S603: A core network device performs authentication on the information indicating that the terminal device has the capability to update the constellation diagram.

S604: The terminal device requests to update the constellation diagram.

S605: The base station starts a procedure of updating the constellation diagram, and queries the terminal device about a parameter for updating the constellation diagram.

S606: The terminal device sends, based on statistics in the terminal device, the parameter for updating the constellation diagram (namely, the constellation diagram design parameter).

In S606, the terminal device may send the constellation diagram design parameter by using the newly added ConstellationRelatedParameters field.

S607: The base station generates a new constellation diagram based on the parameter and a constellation diagram designer. The base station sends information about the new constellation diagram to the terminal device.

S608: After receiving the new constellation diagram, the terminal device requests the base station to switch to the new constellation diagram.

S609: RRC connection reconfiguration is performed between the base station and the terminal device, and after the RRC connection reconfiguration is completed, the base station and the terminal device switch to the new constellation diagram.

Optional S610a: The base station determines that the new constellation diagram fails to work, or performance significantly deteriorates during working; and the base station initiates an indication to switch back to a standard constellation diagram (namely, the original constellation diagram). The terminal device determines to switch back to the standard constellation diagram.

Optional S610b: The terminal device determines that the new constellation diagram fails to work, or performance significantly deteriorates during working; and the terminal device requests to switch back to a standard constellation diagram.

When the new constellation diagram fails to work or the performance significantly deteriorates during working, the switch back to the standard constellation diagram may be performed. A procedure of switching back to the standard constellation diagram may be initiated by the base station (for example, in S610a), or may be initiated by the terminal device (for example, in S610b). Either S610a or S610b may be performed.

S611: The base station and the terminal device perform RRC connection reconfiguration, and after the RRC connection reconfiguration is completed, the base station and the terminal device switch to the standard constellation diagram.

In this embodiment of this application, the communication apparatus may generate, through deep reinforcement learning, a constellation diagram based on a parameter related to a current scenario, to ensure that the generated constellation diagram best matches the current scenario. In addition, a process of negotiation and cooperation between two communication parties during designing of the constellation diagram is further designed, thereby ensuring communication performance.

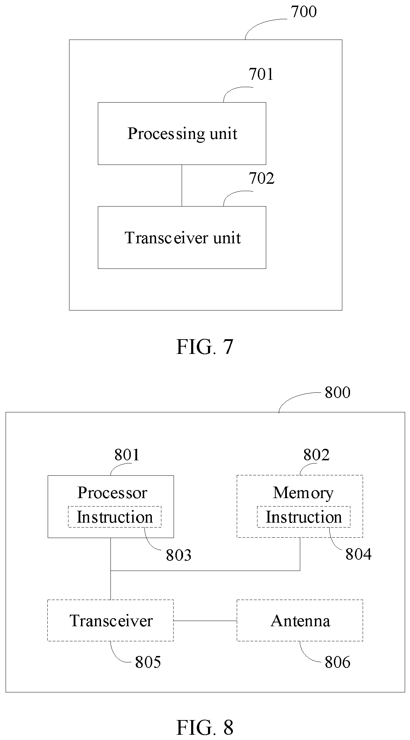

The communication method in embodiments of this application is described above in detail with reference to FIG. 1 to FIG. 6. Based on a same inventive concept as the communication method, an embodiment of this application further provides a communication apparatus. As shown in FIG. 7, a communication apparatus 700 includes a processing unit 701 and a transceiver unit 702. The apparatus 700 may be configured to implement the method applied to the first communication apparatus or the second communication apparatus in the foregoing method embodiments.

In an embodiment, the apparatus 700 is applied to the first communication apparatus. The first communication apparatus may be a network device or a terminal device. For example, the first communication apparatus is a terminal device.

Specifically, the processing unit 701 is configured to determine a constellation diagram design parameter.

The transceiver unit 702 is configured to: send the constellation diagram design parameter, where the constellation diagram design parameter includes a communication scenario design parameter and a communication apparatus design parameter; receive information about a second constellation diagram, where the second constellation diagram corresponds to the constellation diagram design parameter; and perform communication by using the second constellation diagram.

In an implementation, the transceiver unit 702 is further configured to: before sending the constellation diagram design parameter, perform communication by using a first constellation diagram.

In an implementation, the processing unit 701 is further configured to: before the transceiver unit 702 performs communication by using the second constellation diagram, update the first constellation diagram to the second constellation diagram, where the first constellation diagram is different from the second constellation diagram.

In an implementation, the communication scenario design parameter includes at least one piece of the following information: a channel characteristic or environment visualization information, where the channel characteristic includes at least one piece of the following information: a channel environment type indication, a channel model indication, or a channel model, and the environment visualization information includes at least one piece of the following information: an image collected in an environment, a depth map, point cloud data, or a three-dimensional image.

The communication apparatus design parameter includes at least one piece of the following information: a user behavior profile or a constellation diagram designer return parameter, where the user behavior profile includes at least one piece of the following information: a location distribution of the first communication apparatus, a service type distribution of the first communication apparatus, a mobility distribution of the first communication apparatus, a bit rate distribution of the first communication apparatus, or a radio frequency link hardware parameter distribution of the first communication apparatus, and the constellation diagram designer return parameter includes at least one piece of the following information: performance fed back by the first communication apparatus, performance calculated by a constellation diagram designer, or a formula used to evaluate constellation diagram performance.

In an implementation, the processing unit 701 is further configured to: after the transceiver unit 702 receives the information about the second constellation diagram, replace the second constellation diagram with a third constellation diagram, where the third constellation diagram is a constellation diagram that is in a preset constellation diagram and that is closest to the second constellation diagram.

In an implementation, the transceiver unit 702 is further configured to: after performing communication by using the second constellation diagram, receive indication information, where the indication information is used to indicate to use a rollback mechanism, and the rollback mechanism is used to indicate to replace the second constellation diagram with the first constellation diagram; or send a first request message, where the first request message is used to request to use a rollback mechanism, and the rollback mechanism is used to indicate to replace the second constellation diagram with the first constellation diagram.

In an implementation, the processing unit 701 is further configured to store a correspondence between the constellation diagram design parameter and the second constellation diagram.

In an implementation, the processing unit 701 is further configured to search, based on the constellation diagram design parameter, the correspondence for the second constellation diagram corresponding to the constellation diagram design parameter.

In another embodiment, the apparatus 700 is applied to the second communication apparatus. The second communication apparatus may be a network device or a terminal device. For example, the second communication apparatus is a network device (such as a base station).

Specifically, the transceiver unit 702 is configured to receive a constellation diagram design parameter, where the constellation diagram design parameter includes a communication scenario design parameter and a communication apparatus design parameter.

The processing unit 701 is configured to: determine the constellation diagram design parameter, and determine a second constellation diagram, where the second constellation diagram corresponds to the constellation diagram design parameter.

The transceiver unit 702 is further configured to: send information about the second constellation diagram, and perform communication by using the second constellation diagram.

In an implementation, the transceiver unit 702 is further configured to: before receiving the constellation diagram design parameter, perform communication by using a first constellation diagram.

In an implementation, the processing unit 701 is further configured to: before the transceiver unit 702 sends the information about the second constellation diagram, update the first constellation diagram to the second constellation diagram based on the constellation diagram design parameter, where the first constellation diagram is different from the second constellation diagram.

In an implementation, the communication scenario design parameter includes at least one piece of the following information: a channel characteristic or environment visualization information, where the channel characteristic includes at least one piece of the following information: a channel environment type indication, a channel model indication, or a channel model, and the environment visualization information includes at least one piece of the following information: an image collected in an environment, a depth map, point cloud data, or a three-dimensional image.

The communication apparatus design parameter includes at least one piece of the following information: a user behavior profile or a constellation diagram designer return parameter, where the user behavior profile includes at least one piece of the following information: a location distribution of the first communication apparatus, a service type distribution of the first communication apparatus, a mobility distribution of the first communication apparatus, a bit rate distribution of the first communication apparatus, or a radio frequency link hardware parameter distribution of the first communication apparatus, and the constellation diagram designer return parameter includes at least one piece of the following information: performance fed back by the first communication apparatus, performance calculated by a constellation diagram designer, or a formula used to evaluate constellation diagram performance.

In an implementation, the processing unit 701 is specifically configured to: input the constellation diagram design parameter to a constellation diagram designer, and update the first constellation diagram to the second constellation diagram based on the constellation diagram designer.

In an implementation, the processing unit 701 is further configured to replace the second constellation diagram with a third constellation diagram, where the third constellation diagram is a constellation diagram that is in a preset constellation diagram and that is closest to the second constellation diagram.

In an implementation, the transceiver unit 702 is further configured to: after performing communication by using the second constellation diagram, send indication information, where the indication information is used to indicate to use a rollback mechanism, and the rollback mechanism is used to indicate to replace the second constellation diagram with the first constellation diagram; or receive a first request message, where the first request message is used to request to use a rollback mechanism, and the rollback mechanism is used to indicate to replace the second constellation diagram with the first constellation diagram.

In an implementation, the processing unit 701 is further configured to store a correspondence between the constellation diagram design parameter and the second constellation diagram.

In an implementation, the processing unit 701 is further configured to search, based on the constellation diagram design parameter, the correspondence for the second constellation diagram corresponding to the constellation diagram design parameter.

It should be noted that in this embodiment of this application, division into modules is an example, and is merely logical function division. During actual implementation, there may be another division manner. In addition, the functional units in embodiments of this application may be integrated into one processing unit, or each of the functional units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the current technology, or all or some of the technical solutions may be implemented in a form of a software product. The software product is stored in a storage medium and includes several instructions for instructing a computer device (which may be a personal computer, a server, a network device, or the like) or a processor (processor) to perform all or some of the steps of the method according to embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on a same concept as the foregoing communication method, an embodiment of this application further provides a communication apparatus 800 shown in FIG. 8. The apparatus 800 may be configured to implement the method applied to the first communication apparatus or the second communication apparatus in the foregoing method embodiments. For details, refer to the descriptions in the foregoing method embodiments. The apparatus 800 may be disposed in the first communication apparatus or the second communication apparatus, or may be the first communication apparatus or the second communication apparatus.

The apparatus 800 includes one or more processors 801. The processor 801 may be a general-purpose processor, a special-purpose processor, or the like. For example, the processor 801 may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program. The communication apparatus may include a transceiver unit, configured to input (receive) and output (send) a signal. For example, the transceiver unit may be a transceiver, a radio frequency chip, or the like.

The apparatus 800 includes one or more processors 801, and the one or more processors 801 may implement the method applied to the first communication apparatus or the second communication apparatus in the foregoing embodiments.

Optionally, in addition to implementing the method in the foregoing embodiments, the processor 801 may further implement another function.

Optionally, in a design, the processor 801 may execute instructions, to enable the apparatus 800 to perform the method in the foregoing method embodiments. All or some of the instructions, for example, an instruction 803, may be stored in the processor. Alternatively, all or some of the instructions, for example, an instruction 804, may be stored in a memory 802 coupled to the processor. Alternatively, the instructions 803 and 804 may be executed together, to enable the apparatus 800 to perform the method in the foregoing method embodiments.

In another possible design, the communication apparatus 800 may alternatively include a circuit. The circuit may implement functions of the first communication apparatus or the second communication apparatus in the foregoing method embodiments.

In still another possible design, the apparatus 800 may include one or more memories 802. The one or more memories 802 store the instruction 804. The instruction may be run on the processor, to enable the apparatus 800 to perform the method in the foregoing method embodiments. Optionally, the memory may further store data. Optionally, the processor may also store instructions and/or data. For example, the one or more memories 802 may store the correspondence described in the foregoing embodiments, or the related parameters or tables in the foregoing embodiments. The processor and the memory may be separately disposed, or may be integrated together.

In yet another possible design, the apparatus 800 may further include a transceiver 805 and an antenna 806. The processor 801 may be referred to as a processing unit, and control the apparatus (a terminal or a base station). The transceiver 805 may be referred to as a transceiver, a transceiver circuit, the transceiver unit, or the like, and is configured to implement sending and receiving functions of the apparatus by using the antenna 806.

It should be noted that, the processor in this embodiment of this application may be an integrated circuit chip and has a signal processing capability. In an implementation process, steps in the foregoing method embodiments may be implemented by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by a combination of hardware and software modules in a decoding processor. The software module may be located in a mature storage medium in the art, such as a random access memory, a flash memory, a read-only memory, a programmable read-only memory or an electrically erasable programmable memory, or a register. The storage medium is located in the memory, and the processor reads information in the memory and completes the steps in the foregoing method in combination with hardware of the processor.

It may be understood that the memory in embodiments of this application may be a volatile memory or a non-volatile memory, or may include a volatile memory and a non-volatile memory. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (RAM), used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and method described in this specification includes but is not limited to these and any memory of another appropriate type.

An embodiment of this application further provides a computer-readable medium. The computer-readable medium stores a computer program. When the computer program is executed by a computer, the communication method applied to the first communication apparatus or the second communication apparatus according to any one of the method embodiments is implemented.

An embodiment of this application further provides a computer program product. When the computer program product is executed by a computer, the communication method applied to the first communication apparatus or the second communication apparatus according to any one of the method embodiments is implemented.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

An embodiment of this application further provides a processing apparatus, including a processor and an interface. The processor is configured to perform the communication method applied to the first communication apparatus or the second communication apparatus according to any one of the method embodiments.

It should be understood that the processing apparatus may be a chip. The processor may be implemented by hardware, or may be implemented by software. When the processor is implemented by the hardware, the processor may be a logic circuit, an integrated circuit, or the like. When the processor is implemented by the software, the processor may be a general-purpose processor. The general-purpose processor is implemented by reading software code stored in a memory. The memory may be integrated into the processor, or may be located outside the processor and exist independently.

An embodiment of this application further provides a chip, including a logic circuit and an input/output interface. The input/output interface is configured to receive/output code instructions or information. The logic circuit is configured to: execute the code instructions, or perform, based on the information, the communication method applied to the first communication apparatus or the second communication apparatus according to any one of the method embodiments.

The chip may implement functions of the processing unit and/or the transceiver unit in the foregoing embodiments.

For example, the input/output interface is configured to output the constellation diagram design parameter, and the input/output interface is further configured to input the information about the second constellation diagram. Optionally, the input/output interface may be further configured to receive a code instruction. The code instruction is used to instruct to update the first constellation diagram to the second constellation diagram, or instruct to replace the second constellation diagram with the third constellation diagram.

For another example, the input/output interface is configured to input the constellation diagram design parameter, and the input/output interface is further configured to output the information about the second constellation diagram. Optionally, the input/output interface may be further configured to receive a code instruction. The code instruction is used to instruct to update the first constellation diagram to the second constellation diagram, or instruct to replace the second constellation diagram with the third constellation diagram.

An embodiment of this application further provides a communication system, including a first communication apparatus and a second communication apparatus. The first communication apparatus is configured to perform the communication method applied to the first communication apparatus according to any one of the method embodiments. The second communication apparatus is configured to perform the communication method applied to the second communication apparatus according to any one of the method embodiments.

A person of ordinary skill in the art may be aware that, the units and the algorithm steps in the examples described with reference to embodiments disclosed in this specification can be implemented by electronic hardware, computer software, or a combination thereof. To clearly describe interchangeability between hardware and software, the foregoing has generally described compositions and steps in the examples based on functions. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for ease and brevity of description, for specific working processes of the foregoing system, apparatus, and unit, refer to the corresponding processes in the foregoing method embodiments. Details are not described herein again.

In several embodiments provided in this application, it should be understood that the disclosed system, apparatus, and method may be implemented in another manner. For example, the foregoing apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separated, and the parts displayed as units may or may not be physical units, in other words, may be located in one position, or may be distributed on a plurality of network units. Some or all of the units may be selected based on an actual requirement, to achieve the objectives of the solutions of embodiments of this application.

In addition, the functional units in embodiments of this application may be integrated into one processing unit, each of the units may exist alone physically, or two or more units may be integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware, or a combination thereof. When this application is implemented by software, the foregoing functions may be stored in a computer-readable medium or transmitted as one or more instructions or code in a computer-readable medium. The computer-readable medium includes a computer storage medium and a communication medium. The communication medium includes any medium that facilitates transmission of a computer program from one place to another. The storage medium may be any available medium accessible to a computer. The following provides an example but does not impose a limitation: The computer-readable medium may include a RAM, a ROM, an EEPROM, a CD-ROM or another compact disc storage, a magnetic disk storage medium or another magnetic storage device, or any other medium that can be used to carry or store expected program code in a form of instructions or a data structure and can be accessed by the computer. In addition, any connection may be properly defined as a computer-readable medium. For example, if software is transmitted from a website, a server, or another remote source by using a coaxial cable, an optical fiber/cable, a twisted pair, a digital subscriber line (DSL), or wireless technologies such as infrared ray, radio, and microwave, the coaxial cable, optical fiber/cable, twisted pair, DSL, or wireless technologies such as infrared ray, radio, and microwave are included in fixation of a medium to which they belong. A disk (disk) and a disc (disc) used in this application include a compact disc (CD), a laser disc, an optical disc, a digital versatile disc (DVD), a floppy disk, and a Blu-ray disc, where the disk generally copies data in a magnetic manner, and the disc copies data optically by using laser. The foregoing combination shall also be included in the protection scope of the computer-readable medium.

In conclusion, the foregoing descriptions are merely examples of embodiments of the technical solutions of this application, but are not intended to limit the protection scope of this application. Any modification, equivalent replacement, or improvement made without departing from the spirit and principle of this application shall fall within the protection scope of this application.

## Claims

1. A communication method, comprising:
sending, by a first communication apparatus, a constellation diagram design parameter, wherein the constellation diagram design parameter comprises a communication scenario design parameter and a communication apparatus design parameter;
receiving, by the first communication apparatus, information about a second constellation diagram, wherein the second constellation diagram corresponds to the constellation diagram design parameter; and
performing, by the first communication apparatus, communication by using the second constellation diagram.

2. The method according to claim 1, wherein before the sending, by a first communication apparatus, a constellation diagram design parameter, the method further comprises:
performing, by the first communication apparatus, communication by using a first constellation diagram.

3. The method according to claim 2, wherein before the performing, by the first communication apparatus, communication by using the second constellation diagram, the method further comprises:
updating, by the first communication apparatus, the first constellation diagram to the second constellation diagram, wherein the first constellation diagram is different from the second constellation diagram.

4. The method according to any one of claims 1 to 3, wherein
the communication scenario design parameter comprises at least one piece of the following information: a channel characteristic or environment visualization information, wherein the channel characteristic comprises at least one piece of the following information: a channel environment type indication, a channel model indication, or a channel model, and the environment visualization information comprises at least one piece of the following information: an image collected in an environment, a depth map, point cloud data, or a three-dimensional image; and
the communication apparatus design parameter comprises at least one piece of the following information: a user behavior profile or a constellation diagram designer return parameter, wherein the user behavior profile comprises at least one piece of the following information: a location distribution of the first communication apparatus, a service type distribution of the first communication apparatus, a mobility distribution of the first communication apparatus, a bit rate distribution of the first communication apparatus, or a radio frequency link hardware parameter distribution of the first communication apparatus, and the constellation diagram designer return parameter comprises at least one piece of the following information: performance fed back by the first communication apparatus, performance calculated by a constellation diagram designer, or a formula used to evaluate constellation diagram performance.

5. The method according to any one of claims 1 to 4, wherein after the receiving, by the first communication apparatus, information about a second constellation diagram, the method further comprises:
replacing, by the first communication apparatus, the second constellation diagram with a third constellation diagram, wherein the third constellation diagram is a constellation diagram that is in a preset constellation diagram and that is closest to the second constellation diagram.

6. The method according to any one of claims 2 to 5, wherein after the performing, by the first communication apparatus, communication by using the second constellation diagram, the method further comprises:
receiving, by the first communication apparatus, indication information, wherein the indication information is used to indicate to use a rollback mechanism, and the rollback mechanism is used to indicate to replace the second constellation diagram with the first constellation diagram; or
sending, by the first communication apparatus, a first request message, wherein the first request message is used to request to use a rollback mechanism, and the rollback mechanism is used to indicate to replace the second constellation diagram with the first constellation diagram.

7. The method according to any one of claims 1 to 6, further comprising:
storing, by the first communication apparatus, a correspondence between the constellation diagram design parameter and the second constellation diagram.

8. The method according to claim 7, further comprising:
searching, by the first communication apparatus based on the constellation diagram design parameter, the correspondence for the second constellation diagram corresponding to the constellation diagram design parameter.

9. A communication method, comprising:
receiving, by a second communication apparatus, a constellation diagram design parameter, wherein the constellation diagram design parameter comprises a communication scenario design parameter and a communication apparatus design parameter;
sending, by the second communication apparatus, information about a second constellation diagram, wherein the second constellation diagram corresponds to the constellation diagram design parameter; and
performing, by the second communication apparatus, communication by using the second constellation diagram.

10. The method according to claim 9, wherein before the receiving, by a second communication apparatus, a constellation diagram design parameter, the method further comprises:
performing, by the second communication apparatus, communication by using a first constellation diagram.

11. The method according to claim 10, wherein before the sending, by the second communication apparatus, information about a second constellation diagram, the method further comprises:
updating, by the second communication apparatus, the first constellation diagram to the second constellation diagram based on the constellation diagram design parameter, wherein the first constellation diagram is different from the second constellation diagram.

12. The method according to any one of claims 9 to 11, wherein
the communication scenario design parameter comprises at least one piece of the following information: a channel characteristic or environment visualization information, wherein the channel characteristic comprises at least one piece of the following information: a channel environment type indication, a channel model indication, or a channel model, and the environment visualization information comprises at least one piece of the following information: an image collected in an environment, a depth map, point cloud data, or a three-dimensional image; and
the communication apparatus design parameter comprises at least one piece of the following information: a user behavior profile or a constellation diagram designer return parameter, wherein the user behavior profile comprises at least one piece of the following information: a location distribution of the first communication apparatus, a service type distribution of the first communication apparatus, a mobility distribution of the first communication apparatus, a bit rate distribution of the first communication apparatus, or a radio frequency link hardware parameter distribution of the first communication apparatus, and the constellation diagram designer return parameter comprises at least one piece of the following information: performance fed back by the first communication apparatus, performance calculated by a constellation diagram designer, or a formula used to evaluate constellation diagram performance.

13. The method according to claim 11, wherein the updating, by the second communication apparatus, the first constellation diagram to the second constellation diagram based on the constellation diagram design parameter comprises:
inputting, by the second communication apparatus, the constellation diagram design parameter to a constellation diagram designer; and
updating, by the second communication apparatus, the first constellation diagram to the second constellation diagram based on the constellation diagram designer.

14. The method according to any one of claims 9 to 13, wherein before the performing, by the second communication apparatus, communication by using the second constellation diagram, the method further comprises:
replacing, by the second communication apparatus, the second constellation diagram with a third constellation diagram, wherein the third constellation diagram is a constellation diagram that is in a preset constellation diagram and that is closest to the second constellation diagram.

15. The method according to any one of claims 9 to 14, wherein after the performing, by the second communication apparatus, communication by using the second constellation diagram, the method further comprises:
sending, by the second communication apparatus, indication information, wherein the indication information is used to indicate to use a rollback mechanism, and the rollback mechanism is used to indicate to replace the second constellation diagram with the first constellation diagram; or
receiving, by the second communication apparatus, a first request message, wherein the first request message is used to request to use a rollback mechanism, and the rollback mechanism is used to indicate to replace the second constellation diagram with the first constellation diagram.

16. The method according to any one of claims 9 to 15, further comprising:
storing, by the second communication apparatus, a correspondence between the constellation diagram design parameter and the second constellation diagram.

17. The method according to claim 16, further comprising:
searching, by the second communication apparatus based on the constellation diagram design parameter, the correspondence for the second constellation diagram corresponding to the constellation diagram design parameter.

18. A communication apparatus, comprising a processing unit and a transceiver unit, wherein
the processing unit is configured to determine a constellation diagram design parameter; and
the transceiver unit is configured to: send the constellation diagram design parameter, wherein the constellation diagram design parameter comprises a communication scenario design parameter and a communication apparatus design parameter; receive information about a second constellation diagram, wherein the second constellation diagram corresponds to the constellation diagram design parameter; and perform communication by using the second constellation diagram.

19. The apparatus according to claim 18, wherein the transceiver unit is further configured to: before sending the constellation diagram design parameter, perform communication by using a first constellation diagram.

20. The apparatus according to claim 19, wherein the processing unit is further configured to: before the transceiver unit performs communication by using the second constellation diagram, update the first constellation diagram to the second constellation diagram, wherein the first constellation diagram is different from the second constellation diagram.

21. The apparatus according to any one of claims 18 to 20, wherein
the communication scenario design parameter comprises at least one piece of the following information: a channel characteristic or environment visualization information, wherein the channel characteristic comprises at least one piece of the following information: a channel environment type indication, a channel model indication, or a channel model, and the environment visualization information comprises at least one piece of the following information: an image collected in an environment, a depth map, point cloud data, or a three-dimensional image; and
the communication apparatus design parameter comprises at least one piece of the following information: a user behavior profile or a constellation diagram designer return parameter, wherein the user behavior profile comprises at least one piece of the following information: a location distribution of the first communication apparatus, a service type distribution of the first communication apparatus, a mobility distribution of the first communication apparatus, a bit rate distribution of the first communication apparatus, or a radio frequency link hardware parameter distribution of the first communication apparatus, and the constellation diagram designer return parameter comprises at least one piece of the following information: performance fed back by the first communication apparatus, performance calculated by a constellation diagram designer, or a formula used to evaluate constellation diagram performance.

22. The apparatus according to any one of claims 18 to 21, wherein the processing unit is further configured to: after the transceiver unit receives the information about the second constellation diagram, replace the second constellation diagram with a third constellation diagram, wherein the third constellation diagram is a constellation diagram that is in a preset constellation diagram and that is closest to the second constellation diagram.

23. The apparatus according to any one of claims 19 to 22, wherein the transceiver unit is further configured to: after performing communication by using the second constellation diagram, receive indication information, wherein the indication information is used to indicate to use a rollback mechanism, and the rollback mechanism is used to indicate to replace the second constellation diagram with the first constellation diagram; or send a first request message, wherein the first request message is used to request to use a rollback mechanism, and the rollback mechanism is used to indicate to replace the second constellation diagram with the first constellation diagram.

24. The apparatus according to any one of claims 18 to 23, wherein the processing unit is further configured to store a correspondence between the constellation diagram design parameter and the second constellation diagram.

25. The apparatus according to claim 24, wherein the processing unit is further configured to search, based on the constellation diagram design parameter, the correspondence for the second constellation diagram corresponding to the constellation diagram design parameter.

26. A communication apparatus, comprising a processing unit and a transceiver unit, wherein
the transceiver unit is configured to receive a constellation diagram design parameter, wherein the constellation diagram design parameter comprises a communication scenario design parameter and a communication apparatus design parameter;
the processing unit is configured to: determine the constellation diagram design parameter, and determine a second constellation diagram, wherein the second constellation diagram corresponds to the constellation diagram design parameter; and
the transceiver unit is further configured to: send information about the second constellation diagram, and perform communication by using the second constellation diagram.

27. The apparatus according to claim 26, wherein the transceiver unit is further configured to: before receiving the constellation diagram design parameter, perform communication by using a first constellation diagram.

28. The apparatus according to claim 27, wherein the processing unit is further configured to: before the transceiver unit sends the information about the second constellation diagram, update the first constellation diagram to the second constellation diagram based on the constellation diagram design parameter, wherein the first constellation diagram is different from the second constellation diagram.

29. The apparatus according to any one of claims 26 to 28, wherein
the communication scenario design parameter comprises at least one piece of the following information: a channel characteristic or environment visualization information, wherein the channel characteristic comprises at least one piece of the following information: a channel environment type indication, a channel model indication, or a channel model, and the environment visualization information comprises at least one piece of the following information: an image collected in an environment, a depth map, point cloud data, or a three-dimensional image; and
the communication apparatus design parameter comprises at least one piece of the following information: a user behavior profile or a constellation diagram designer return parameter, wherein the user behavior profile comprises at least one piece of the following information: a location distribution of the first communication apparatus, a service type distribution of the first communication apparatus, a mobility distribution of the first communication apparatus, a bit rate distribution of the first communication apparatus, or a radio frequency link hardware parameter distribution of the first communication apparatus, and the constellation diagram designer return parameter comprises at least one piece of the following information: performance fed back by the first communication apparatus, performance calculated by a constellation diagram designer, or a formula used to evaluate constellation diagram performance.

30. The apparatus according to claim 28, wherein the processing unit is specifically configured to: input the constellation diagram design parameter to a constellation diagram designer, and update the first constellation diagram to the second constellation diagram based on the constellation diagram designer.

31. The apparatus according to any one of claims 26 to 30, wherein the processing unit is further configured to replace the second constellation diagram with a third constellation diagram, wherein the third constellation diagram is a constellation diagram that is in a preset constellation diagram and that is closest to the second constellation diagram.

32. The apparatus according to any one of claims 26 to 31, wherein the transceiver unit is further configured to: after performing communication by using the second constellation diagram, send indication information, wherein the indication information is used to indicate to use a rollback mechanism, and the rollback mechanism is used to indicate to replace the second constellation diagram with the first constellation diagram; or receive a first request message, wherein the first request message is used to request to use a rollback mechanism, and the rollback mechanism is used to indicate to replace the second constellation diagram with the first constellation diagram.

33. The apparatus according to any one of claims 26 to 32, wherein the processing unit is further configured to store a correspondence between the constellation diagram design parameter and the second constellation diagram.

34. The apparatus according to claim 33, wherein the processing unit is further configured to search, based on the constellation diagram design parameter, the correspondence for the second constellation diagram corresponding to the constellation diagram design parameter.

35. A communication apparatus, wherein the apparatus comprises a processor and a memory, and the processor and the memory are electrically coupled;
the memory is configured to store computer program instructions; and
the processor is configured to execute some or all of the computer program instructions in the memory, and when the some or all of the computer program instructions are executed, the method according to any one of claims 1 to 8 is implemented, or the method according to any one of claims 9 to 17 is implemented.

36. A computer-readable storage medium, wherein the computer-readable storage medium stores computer-readable instructions, and when a computer reads and executes the computer-readable instructions, the computer is enabled to perform the method according to any one of claims 1 to 8 or the method according to any one of claims 9 to 17.

37. A chip, comprising: a logic circuit and an input/output interface, wherein the input/output interface is configured to receive code instructions or information, and the logic circuit is configured to: execute the code instructions, or perform, based on the information, the method according to any one of claims 1 to 8 or the method according to any one of claims 9 to 17.

38. A communication system, comprising the communication apparatus according to any one of claims 18 to 25 and the communication apparatus according to any one of claims 26 to 34.

39. A computer program product, wherein the computer program product comprises a computer program, and when the computer program runs on a computer, the computer is enabled to perform the method according to any one of claims 1 to 8 or the method according to any one of claims 9 to 17.
